(19) Europäisches Patentamt
European Patent Office
Office européen des brevets

(11) EP 4 534 583 A1

(12) EUROPEAN PATENT APPLICATION
published in accordance with Art. 153(4) EPC

(43) Date of publication:
**09.04.2025 Bulletin 2025/15**

(21) Application number: **23811795.6**

(22) Date of filing: **23.05.2023**

(51) International Patent Classification (IPC):
***C08G 63/16*** (2006.01) ***C08G 63/08*** (2006.01)
***C08G 63/78*** (2006.01) ***C08J 5/18*** (2006.01)
***C08L 101/16*** (2006.01)

(52) Cooperative Patent Classification (CPC):
**C08G 63/08; C08G 63/16; C08G 63/78; C08J 5/18; C08L 101/16**

(86) International application number:
**PCT/JP2023/019050**

(87) International publication number:
**WO 2023/228923 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.05.2022 JP 2022084696**
**13.01.2023 JP 2023004027**

(71) Applicant: **DIC Corporation**
**Tokyo 174-8520 (JP)**

(72) Inventors:
- **MIYAWAKI Atsuhisa**
**Sakura-shi, Chiba 285-8668 (JP)**
- **NISHIZAWA Shuhei**
**Sakura-shi, Chiba 285-8668 (JP)**
- **DOHI Tomoki**
**Sakura-shi, Chiba 285-8668 (JP)**
- **INAGAKI Shou**
**Sakura-shi, Chiba 285-8668 (JP)**
- **KAI Hidetomo**
**Sakura-shi, Chiba 285-8668 (JP)**
- **HARANO Chika**
**Ichihara-shi, Chiba 290-8585 (JP)**
- **MIHARA Takashi**
**Ichihara-shi, Chiba 290-8585 (JP)**

(74) Representative: **Kraus & Lederer PartGmbB**
**Thomas-Wimmer-Ring 15**
**80539 München (DE)**

# (54) COPOLYESTER RESIN AND METHOD FOR PRODUCING SAME

(57) Provided are a copolyester resin having excellent thermoformability and biodegradability and a method for producing the copolyester resin. The copolyester resin includes a combination of a biodegradable block (X) being a biodegradable constitutional unit and a non-biodegradable block (Y) being a non-biodegradable constitutional unit.

EP 4 534 583 A1

## Description

Technical Field

The present invention relates to a copolyester resin and a method for producing the copolyester resin.

Background Art

Most synthetic resins do not easily decompose in the natural environment. Therefore, the deterioration of the natural environment due to synthetic resins has become a problem. For example, discarded synthetic resins become microplastics, thereby polluting the marine environment.

In response to a social issue of global environmental deterioration caused by the mass disposal of synthetic resins, a demand is increasing for sustainable products (packaging materials, films, and the like) made from a resin that is biodegradable in any environment (for example, seawater, fresh water, soil, and compost).

Examples of the resin that is biodegradable in any environment include polyhydroxyalkanoate (PHA). PHA has been attracting the attention as an environment-friendly resin and has been widely used and also an expansion of its application area in the future has been desired.

However, there is a problem in that the melting temperature and thermal decomposition temperature of PHA are close to each other and thermal decomposition of PHA proceeds during processing, and therefore the thermoformability of PHA is low for general-purpose resins. Furthermore, when PHA is synthesized as a polymer from a monomer by chemical polymerization, it is difficult to synthesize a high molecular weight polymer because the upper limit of polymerization temperature of PHA is low. Therefore, there is a need for a biodegradable resin that can be polymerized at a relatively high temperature like general-purpose resins and has thermoformability.

In order to solve the above-described problems, a technology has been reported in which, by introducing a specific chemical structure into polyester that is biodegradable in limited environments, the polyester can be biodegradable also in other environments. For example, copolyester resins having biodegradability in seawater and thermal properties have been reported in NPL 1 and NPL 2.

Citation List

Non Patent Literature

NPL 1: Polymer Degradation and Stability, 181, (2020), 109353
NPL 2: Polymer Degradation and Stability, 184, (2021), 109467

Summary of Invention

Technical Problem

However, the copolyester resins disclosed in NPL 1 and NPL 2 are triblock copolymers, and therefore the biodegradability in seawater of the copolyester resins depend on the molecular weight of a polylactic acid moiety, which is a moiety being non-biodegradable in seawater. Therefore, there is a limitation on molecular weight for designing the copolyester resins. In addition, further improvement of thermoformability and biodegradability has been required.

An object of the present invention is to provide a copolyester resin with excellent thermoformability and biodegradability and a method for producing the copolyester resin.

Solution to Problem

The inventors carried out extensive studies directed to solving the above-described problem. As a result, the inventors found that the above-mentioned problem can be solved, and completed the present invention including the following aspects.

That is, the present invention encompasses the following aspects.

[1] A copolyester resin including a combination of: a biodegradable block (X) being a biodegradable constitutional unit; and a non-biodegradable block (Y) being a non-biodegradable constitutional unit.
[2] The copolyester resin according to [1], wherein the molar ratio (X/Y) of the biodegradable block (X) to the non-biodegradable block (Y) is 1/99 to 95/5.

[3] The copolyester resin according to [1] or [2], wherein the biodegradable block (X) is derived from a polymer (x) including a biodegradable constitutional unit derived from a structure in which hydroxyalkanoic acid or dibasic acid (I-a) and glycol (I-b) are bound to each other.

[4] The copolyester resin according to any one of [1] to [3], wherein the non-biodegradable block (Y) is derived from a polymer (y) including a non-biodegradable constitutional unit.

[5] The copolyester resin according to any one of [1] to [4], wherein the average chain length of the biodegradable block (X) is greater than 1.2.

[6] The copolyester resin according to any one of [3] to [5], wherein the hydroxyalkanoic acid is a constitutional unit derived from 6-hydroxyhexanoic acid or a constitutional unit derived from polycaprolactone.

[7] The copolyester resin according to any one of [3] to [6], wherein the dibasic acid (I-a) is expressed by a formula (1) and the glycol (I-b) is expressed by a formula (2).

[Chemical Formula 1]

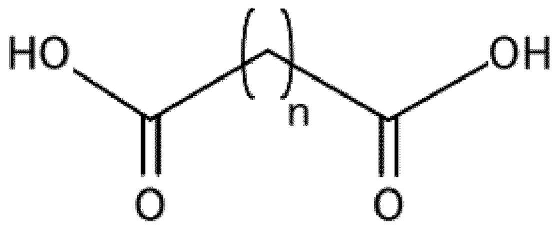

Formula (1)

(In the formula (1), n represents an integer from 4 to 8.)

[Chemical Formula 2]

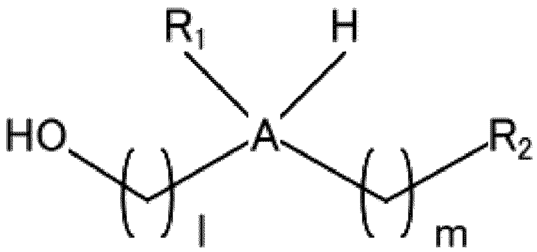

Formula (2)

(In the formula (2), A represents a carbon atom or an oxygen atom, $R_1$ represents a hydrogen atom, an alkyl group having 1 to 4 carbon atoms, or a hydroxyl group, and $R_2$ represents a hydrogen atom or a hydroxyl group. l and m each independently represent an integer from 0 to 4, and l + m is 1 or more.
Note that, when A is an oxygen atom, $R_1$ and H bound to A are not present. Either $R_1$ or $R_2$ is a hydroxyl group, and not both $R_1$ and $R_2$ are hydroxyl groups.)

[8] The copolyester resin according to any one of [3] to [7], wherein the biodegradable constitutional unit in the polymer (x) is expressed by the following formula (3A) or (3B).

[Chemical Formula 3]

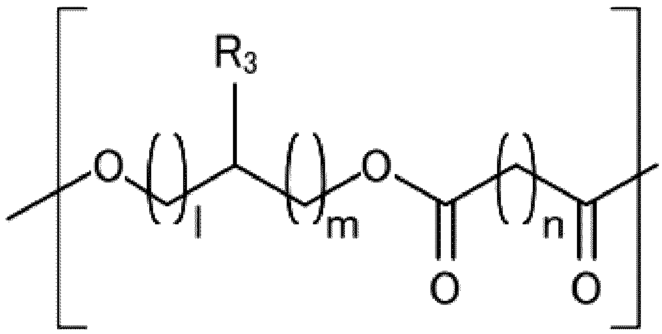

Formula (3A)

[Chemical Formula 4]

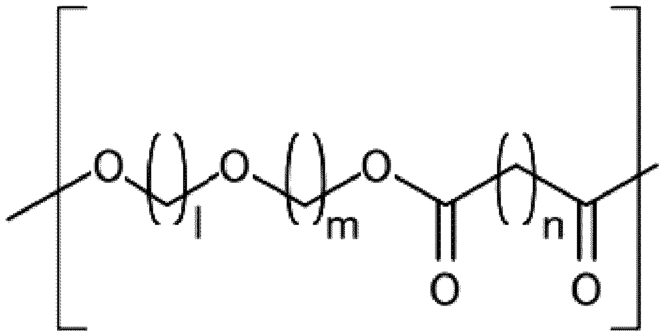

Formula (3B)

(In the formula (3A) and the formula (3B), $R_3$ represents a hydrogen atom or a methyl group, l and m each independently represent an integer from 0 to 4 and l + m is 1 or more, and n represents an integer from 4 to 8.)

[9] The copolyester resin according to any one of [3] to [8], wherein the dibasic acid (I-a) is at least one selected from the group consisting of adipic acid, azelaic acid, and sebacic acid.

[10] The copolyester resin according to any one of [3] to [9], wherein the glycol (I-b) is at least one selected from the group consisting of ethylene glycol, diethylene glycol, 1,2-propylene glycol, 1,3-propylene glycol, 2-methyl-1,3-propanediol, 1,3-butanediol, 1,4-butanediol, 1,5-pentanediol, 3-methyl-1,5-pentanediol, 1,6-hexanediol, and 1,9-nonanediol.

[11] The copolyester resin according to any one of [3] to [10], wherein the biodegradable constitutional unit in the polymer (x) is at least one selected from the group consisting of

a constitutional unit derived from a structure in which ethylene glycol and adipic acid are bound to each other, a constitutional unit derived from a structure in which diethylene glycol and adipic acid are bound to each other, a constitutional unit derived from a structure in which 1,2-propylene glycol and adipic acid are bound to each other, a constitutional unit derived from a structure in which 1,3-propylene glycol and adipic acid are bound to each other, a constitutional unit derived from a structure in which 2-methyl-1,3-propanediol and adipic acid are bound to each other, a constitutional unit derived from a structure in which 1,3-butanediol and adipic acid are bound to each other, a constitutional unit derived from a structure in which 1,4-butanediol and adipic acid are bound to each other, a constitutional unit derived from a structure in which 1,5-pentanediol and adipic acid are bound to each other, a constitutional unit derived from a structure in which 3-methyl-1,5-pentanediol and adipic acid are bound to each other, a constitutional unit derived from a structure in which 1,6-hexanediol and adipic acid are bound to each other, a constitutional unit derived from a structure in which 1,9-nonanediol and adipic acid are bound to each other,

a constitutional unit derived from a structure in which ethylene glycol and sebacic acid are bound to each other, a constitutional unit derived from a structure in which diethylene glycol and sebacic acid are bound to each other, a constitutional unit derived from a structure in which 1,2-propylene glycol and sebacic acid are bound to each other, a constitutional unit derived from a structure in which 1,3-propylene glycol and sebacic acid are bound to each other, a constitutional unit derived from a structure in which 2-methyl-1,3-propanediol and sebacic acid are

bound to each other, a constitutional unit derived from a structure in which 1,3-butanediol and sebacic acid are bound to each other, a constitutional unit derived from a structure in which 1,4-butanediol and sebacic acid are bound to each other, a constitutional unit derived from a structure in which 1,5-pentanediol and sebacic acid are bound to each other, a constitutional unit derived from a structure in which 3-methyl-1,5-pentanediol and sebacic acid are bound to each other, a constitutional unit derived from a structure in which 1,6-hexanediol and sebacic acid are bound to each other, a constitutional unit derived from a structure in which 1,9-nonanediol and sebacic acid are bound to each other,
a constitutional unit derived from a structure in which ethylene glycol, 1,6-hexanediol, and adipic acid are bound to each other, a constitutional unit derived from a structure in which ethylene glycol, 1,6-hexanediol, 2-methyl-1,3-propanediol, and adipic acid are bound to each other,
a constitutional unit derived from a structure in which ethylene glycol, diethylene glycol, and adipic acid are bound to each other, a constitutional unit derived from a structure in which ethylene glycol, diethylene glycol, 2-methyl-1,3-propanediol, and adipic acid are bound to each other,
a constitutional unit derived from a structure in which ethylene glycol and sebacic acid are bound to each other, and a constitutional unit derived from a structure in which ethylene glycol, 2-methyl-1,3-propanediol, adipic acid, and sebacic acid are bound to each other.

[12] The copolyester resin according to any one of [4] to [11], wherein the non-biodegradable constitutional unit in the polymer (y) is derived from butylene succinate or butylene adipate terephthalate.
[13] The copolyester resin according to any one of [4] to [12], wherein the non-biodegradable constitutional unit in the polymer (y) is either a constitutional unit derived from a structure in which 1,4-butanediol and succinic acid are bound to each other or a constitutional unit derived from a structure in which 1,4-butanediol, adipic acid, and terephthalic acid are bound to each other.
[14] The copolyester resin according to any one of [1] to [13], wherein the biodegradable block (X) being the biodegradable constitutional unit includes a unit (A) and a unit (B), the unit (A) and the unit (B) being any one of the following (i) to (iii):

(i) the unit (A) is a triad unit derived from "a structure in which 2-methyl-1,3-propanediol, adipic acid, and 2-methyl-1,3-propanediol are bound to each other" and the unit (B) is a triad unit derived from "a structure in which 1,4-butanediol, adipic acid, and 1,4-butanediol are bound to each other";
(ii) the unit (A) is a triad unit derived from "a structure in which 2-methyl-1,3-propanediol, sebacic acid, and 2-methyl-1,3-propanediol are bound to each other" and the unit (B) is a triad unit derived from "a structure in which 1,4-butanediol, sebacic acid, and 1,4-butanediol are bound to each other"; and
(iii) the unit (A) is a triad unit derived from "a structure in which 3-methyl-1,5-pentanediol, adipic acid, and 3-methyl-1,5-pentanediol are bound to each other" and the unit (B) is a triad unit derived from "a structure in which 1,4-butanediol, adipic acid, and 1,4-butanediol are bound to each other".

[15] The copolyester resin according to any one of [1] to [14], wherein the melting point (Tm) of the copolyester resin is 65°C or higher.
[16] The copolyester resin according to any one of [1] to [15], wherein the copolyester resin is biodegradable in seawater environments, freshwater environments, soil environments, and compost environments.
[17] A method for producing the copolyester resin according to any one of [1] to [16], the copolyester resin including a combination of a biodegradable block (X) and a non-biodegradable block (Y),

the biodegradable block (X) being a block derived from a polymer (x) including a biodegradable constitutional unit, the non-biodegradable block (Y) being a block derived from a polymer (y) including a non-biodegradable constitutional unit,
the method including:
subjecting the polymer (x) and the polymer (y) to a transesterification reaction to obtain a block copolymer including the biodegradable block (X) and the non-biodegradable block (Y).

[18] A resin composition including the copolyester resin according to any one of [1] to [16].
[19] A sheet or a film including the resin composition according to [18].

Advantageous Effects of Invention

The present invention can provide a copolyester resin with excellent thermoformability and biodegradability and a method for producing the copolyester resin.

Description of Embodiments

Hereinafter, a copolyester resin according to the present invention will be described in detail. The following description of constitutionals is merely an example as one embodiment of the present invention, and the present invention is not limited to the contents thereof.

(Copolyester resin)

The copolyester resin according to the present invention is a resin including a combination of a biodegradable block (X) being a biodegradable constitutional unit; and a non-biodegradable block (Y) being a non-biodegradable constitutional unit.

The expression, a substance is "biodegradable", means, for example, that, when the substance is discharged into the natural environment, the substance is decomposed into carbon dioxide and water by the action of microorganisms and the like. Examples of "the environment" for the decomposition include seawater environments, freshwater environments, soil environments, and compost.

However, the present invention focuses on biodegradability, particularly in seawater environments.

In the present invention, the term "biodegradable" means that a degradation rate in seawater is 15% or higher.

On the other hand, in the present invention, the term "non-biodegradable" means that a degradation rate in seawater is less than 15%.

Note that, in the present invention, degradability in "seawater environments" is specified, but environments other than seawater environments are not excluded. It is more preferable that not only biodegradability is exhibited in seawater environments, but also the degradation rate is 15% or higher also in environments other than seawater environments, such as freshwater environments, soil environments, and compost.

The copolyester resin according to the present invention has excellent biodegradability and can be polymerized and thermoformed at a relatively high temperature of the same level as general-purpose resins. In other words, the copolyester resin according to the present invention has excellent thermoformability and biodegradability. Using a resin composition including the copolyester resin, a sheet, a film, and the like can be obtained.

An example of a presumed action mechanism that can remarkably achieve the effects of excellent thermoformability and biodegradability is described below.

The copolyester resin according to the present invention includes a combination of the biodegradable block (X) being a biodegradable constitutional unit and the non-biodegradable block (Y) being a non-biodegradable constitutional unit. An enzyme in the environment causes the cleavage of the block (X) moiety to proceed. Thus, the copolyester resin becomes an oligomer that can be metabolized by microorganisms, and the entirety of the copolyester resin biodegrades. Furthermore, the copolyester resin according to the present invention includes the block (Y) including a non-biodegradable constitutional unit having excellent thermoformability. Thus, the entirety of the copolyester resin has excellent thermoformability.

In addition to the above-described features, the copolyester resin according to the present invention includes a plurality of types of biodegradable constitutional units at a well-balanced predetermined ratio, whereby the cleavage of a biodegradable moiety by an enzyme in the environment can proceed at many portions, which leads to promoting the biodegradability of the entirety of the copolyester resin.

More specifically, for example, the copolyester resin according to the present invention includes the block (X) derived from the polymer (x) including a biodegradable constitutional unit derived from a structure in which hydroxyalkanoic acid or dibasic acid (I-a) and glycol (I-b) are bound to each other. An enzyme in the environment causes the cleavage of the block (X) moiety to proceed. Thus, the copolyester resin becomes an oligomer that can be metabolized by microorganisms, and the entirety of the copolyester resin biodegrades. Furthermore, the copolyester resin according to the present invention includes the block (Y) derived from the polymer (y) including a non-biodegradable constitutional unit having excellent thermoformability. Thus, the entirety of the copolyester resin has excellent thermoformability.

The biodegradable block (X) and the non-biodegradable block (Y) are included at a specific mixing ratio to form the copolyester resin, and therefore, when the cleavage of the biodegradable block (X) moiety present at a specific ratio proceeds, the copolyester resin becomes an oligomer that can be metabolized by microorganisms, and the entirety of the copolyester resin biodegrades. Furthermore, in the copolyester resin according to the present invention, the non-biodegradable block (Y) is present at a specific ratio, and therefore the entirety of the copolyester resin has excellent thermoformability.

Furthermore, the biodegradable block (X) derived from the polymer (x) and having a specific average chain length is arranged in the copolyester resin, and, when the cleavage of the biodegradable block (X) moiety having the specific average chain length proceeds owing to an enzyme in the environment, the copolyester resin becomes an oligomer that can be metabolized by microorganisms, whereby the entirety of the copolyester resin biodegrades. Furthermore, in the copolyester resin according to the present invention, the non-biodegradable block (Y) derived from

the polymer (y) including a non-biodegradable constitutional unit having excellent thermoformability is arranged at a specific molar ratio, and therefore the entirety of the copolyester resin has excellent thermoformability.

Hereinafter, the constitutional components of the copolyester will be described.

The copolyester resin includes the biodegradable block (X) and the non-biodegradable block (Y), more preferably includes an appropriate combination of the biodegradable block (X) and the non-biodegradable block (Y).

The copolyester resin includes the biodegradable block (X) derived from the polymer (x) including a biodegradable constitutional unit and the non-biodegradable block (Y) derived from the polymer (y) including a non-biodegradable constitutional unit.

The polymer (x) is preferably a polymer including a biodegradable constitutional unit derived from a structure in which hydroxyalkanoic acid or dibasic acid (I-a) and glycol (I-b) are bound to each other.

On the other hand, the polymer (y) is preferably a polymer including a non-biodegradable constitutional unit, for example, a non-biodegradable constitutional unit derived from a structure in which dibasic acid and glycol are bound to each other.

<Polymer (x) including biodegradable constitutional unit>

The polymer (x) includes at least one biodegradable constitutional unit. As the biodegradable constitutional unit included in the polymer (x), one or two or more types of constitutional units may be used in combination.

The constitutional unit included in the polymer (x) is preferably derived from a structure in which hydroxyalkanoic acid or dibasic acid (I-a) and glycol (I-b) are bound to each other.

Examples of the hydroxyalkanoic acid or the dibasic acid (I-a) and the glycol (I-b) to be used for the formation of the polymer (x) include the followings.

Depending on a combination of the type of the hydroxyalkanoic acid or the dibasic acid and the type of the glycol, the degradation rate in seawater of the structure resulting from binding varies, and therefore, to form the polymer (x) having biodegradability, preferred types of the hydroxyalkanoic acid and the dibasic acid and the glycol illustrated below are beneficially suitably selected as appropriate so that the structure resulting from binding has a degradation rate in seawater of 15% or higher.

<<Hydroxyalkanoic acid>>

Examples of the unit of the hydroxyalkanoic acid include: the units of hydroxy $C_{2-15}$ alkanoic acids that may have a $C_{1-6}$ alkyl group, such as glycolic acid, 2-hydroxypropanoic acid (lactic acid), 3-hydroxypropanoic acid, 2-hydroxybutanoic acid (2-hydroxybutyric acid), 3-hydroxybutanoic acid, 4-hydroxybutanoic acid, 3-hydroxy-3-methyl-butanoic acid, 2- hydroxypentanoic acid (2-hydroxyvaleric acid), 3-hydroxypentanoic acid, 5-hydroxypentanoic acid, 2-hydroxy-2-methyl-pentanoic acid, 3-hydroxyhexanoic acid, 6-hydroxyhexanoic acid, 6-hydroxyheptanoic acid, 3-hydroxyheptanoic acid, 7-hydroxyheptanoic acid, 3-hydroxyoctanoic acid, 8-hydroxyoctanoic acid, 3-hydroxynonanoic acid, 9-hydroxynonanoic acid, 3-hydroxydecanoic acid, and 10-hydroxydecanoic acid; the unit of 12-hydroxystearic acid; and the unit of ricinoleic acid.

Note that the unit of the hydroxyalkanoic acid may be a unit of the corresponding lactone. Examples of the unit of lactone include the units of $C_{3-15}$ lactones that may have a di-$C_{1-12}$ alkyl group other than β-propiolactone, β-dimethylpropiolactone, γ-butyrolactone, γ-dimethylbutyrolactone, δ-valerolactone, and ε-caprolactone.

These units of the hydroxyalkanoic acid and lactone can be used alone or in combination of two or more. From the viewpoint of biodegradability, among these units of the hydroxyalkanoic acid, preferred are the units of hydroxy $C_{3-10}$ alkanoic acids (the units of hydroxy $C_{3-10}$ alkanoic acids other than 3-hydroxybutyric acid), such as 3-hydroxypropanoic acid, 3-hydroxybutanoic acid, 4-hydroxybutanoic acid (4-hydroxybutyric acid), 3-hydroxyvaleric acid, 3-hydroxyhexanoic acid, 6-hydroxyhexanoic acid, 3-hydroxyheptanoic acid, 3-hydroxyoctanoic acid, 3-hydroxynonanoic acid, 3-hydroxydecanoic acid, and 10-hydroxydecanoic acid, or the units of the corresponding lactone.

The hydroxyalkanoic acid is preferably a constitutional unit derived from 6-hydroxyhexanoic acid or a constitutional unit derived from polycaprolactone.

Here, the poly(caprolactone) is a polyester expressed by the following formula (t).

[Chemical Formula 5]

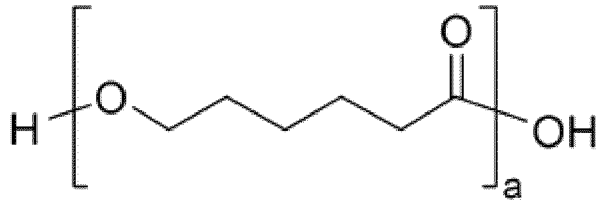

(t)

(In the formula (t), a represents a positive integer.)

The poly(caprolactone) is a ring-opening reaction product of ε-caprolactone. The constitutional unit of the poly(caprolactone) is a constitutional unit (6HH-U) derived from 6-hydroxyhexanoic acid (6HH).

The expression "the constitutional unit of the poly(caprolactone)" means one residue of 6-hydroxyhexanoic acid (6HH) in the copolyester, specifically, a structure in which a hydrogen atom in a hydroxy group of 6-hydroxyhexanoic acid (6HH) and a hydroxy residue in a carboxyl group thereof are excluded.

<<Dibasic acid>>

The dibasic acid is not limited to a particular one, but examples of the dibasic acid include non-aromatic dicarboxylic acid and aromatic dicarboxylic acid, anhydrides thereof, halides thereof, and esterified products thereof.

<<Non-aromatic dicarboxylic acid>>

Examples of the non-aromatic dicarboxylic acid include aliphatic dicarboxylic acid, alicyclic dicarboxylic acid, and unsaturated-bond-containing non-aromatic dicarboxylic acid. The number of carbon atoms of the non-aromatic dicarboxylic acid is not particularly limited, but is, for example, 3 to 15.

Examples of the aliphatic dicarboxylic acid include succinic acid, glutaric acid, adipic acid, pimelic acid, suberic acid, azelaic acid, sebacic acid, and dodecanedicarboxylic acid.

Examples of the alicyclic dicarboxylic acid include alicyclic dicarboxylic acids having 8 to 15 carbon atoms.

Specific examples of the alicyclic dicarboxylic acid include 1,3-cyclopentanedicarboxylic acid and 1,4-cyclohexanedicarboxylic acid.

Examples of the unsaturated-bond-containing non-aromatic dicarboxylic acid include maleic acid and fumaric acid.

<<Aromatic dicarboxylic acid>>

Examples of the aromatic dicarboxylic acid include aromatic dicarboxylic acids having 6 to 20 carbon atoms. Specific examples of the aromatic dicarboxylic acid include orthophthalic acid, terephthalic acid, isophthalic acid, 1,4-naphthalene dicarboxylic acid, 2,5-naphthalene dicarboxylic acid, 2,6-naphthalene dicarboxylic acid, naphthalic acid, and biphenyldicarboxylic acid, 1,2-bis(phenoxy)ethane-p,p'-dicarboxylic acid.

From the viewpoint of biodegradability, among these dibasic acids, the non-aromatic dicarboxylic acid is preferably used, and the aliphatic dicarboxylic acid is more preferably used, and adipic acid, pimelic acid, suberic acid, azelaic acid, and sebacic acid, which are expressed by the following formula (1), are still more preferably used, and adipic acid and sebacic acid are particularly preferably used. Two or more types of dibasic acids may be used in combination.

[Chemical Formula 6]

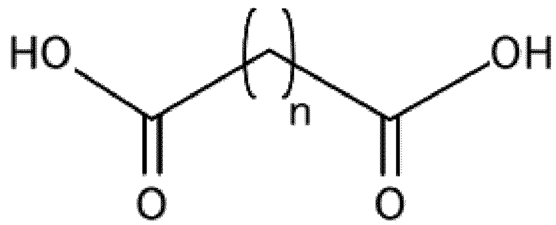

Formula (1)

(In the formula (1), n represents an integer from 4 to 8.)

<<Glycol>>

Examples of the glycol include non-aromatic glycol and aromatic glycol.

<<<Non-aromatic glycol>>>

Examples of the non-aromatic glycol include aliphatic glycol and alicyclic glycol. The number of carbon atoms of the non-aromatic glycol is, for example, 1 to 15.

Examples of the aliphatic glycol include ethylene glycol, 1,3-propylene glycol, 1,2-propylene glycol, 1,3-butanediol, 1,4-butanediol, 2-methyl-1,3-propanediol, neopentyl glycol, cyclohexanedimethanol, 1,5-pentanediol, 3-methyl-1,5-pentanediol, 1,6-hexanediol, 2-methylpentan-2,4-diol, 3,3-dimethyl-1,2-butanediol, 2,3-dimethyl-2,3-butanediol, butyl ethyl propanediol, 1,9-nonanediol, diethylene glycol, triethylene glycol, tetraethylene glycol, dipropylene glycol, and tripropylene glycol.

Examples of the alicyclic glycols include alicyclic diol having 6 to 15 carbon atoms. Examples of the alicyclic diols include 1,3-bis(2-hydroxypropyl)cyclopentane, 1,3-bis(2-hydroxybutyl)cyclopentane, 1,4-bis(hydroxymethyl)cyclohexane, 1,4-bis(2-hydroxypropyl)cyclohexane, and 1,4-bis(2-hydroxybutyl)cyclohexane.

Examples of the aromatic glycols include aromatic glycol having 6 to 20 carbon atoms.

Examples of the aromatic glycols having 6 to 20 carbon atoms include 1,3-benzenedimethanol, 1,4-benzenedimethanol, 1,4-benzenediethanol, and 1,4-bis(2-hydroxyethoxy)benzene.

From the viewpoint of biodegradability, among these glycols, the non-aromatic glycol is preferably used, the aliphatic glycol is more preferably used, and glycol expressed by the following formula (2) is particularly preferably used. Two or more types of glycols may be used in combination.

[Chemical Formula 7]

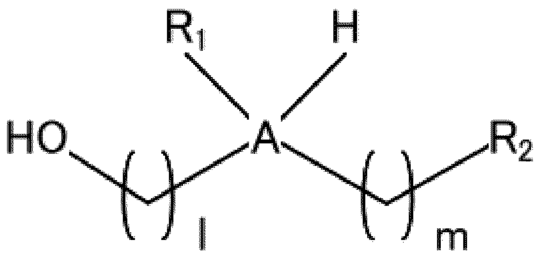

Formula (2)

(In the formula (2), A represents a carbon atom or an oxygen atom, $R_1$ represents a hydrogen atom, an alkyl group having 1 to 4 carbon atoms, or a hydroxyl group, and $R_2$ represents a hydrogen atom or a hydroxyl group. l and m each independently represent an integer from 0 to 4, and l + m is 1 or more.

However, when A is an oxygen atom, $R_1$ and H bound to A are not present. Either $R_1$ or $R_2$ is a hydroxyl group, and not both $R_1$ and $R_2$ are hydroxyl groups.)

Examples of the above-mentioned alkyl group having 1 to 4 carbon atoms include a methyl group, an ethyl group, an n-propyl group, an i-propyl group, a cyclopropyl group, an n-butyl group, an i-butyl group, an s-butyl group, a t-butyl group, a cyclobutyl group, a 1-methyl-cyclopropyl group, and a 2-methyl-cyclopropyl group. Among them, a methyl group is preferably included from the viewpoint of excellent reactivity.

From the viewpoint of excellent biodegradability, among glycols expressed by the formula (2), 1,3-propanediol, 1,4-butanediol, 2-methyl-1,3-propanediol, 1,5-pentanediol, 3-methyl-1,5-pentanediol, 2-(2-hydroxyethoxy)ethanol, 3-(3-(hydroxypropoxy)propan-1-ol are preferably included, and 2-methyl-1,3-propanediol and 3-methyl-1,5-pentanediol are more preferably included.

The biodegradable constitutional unit is derived from a structure, and the structure is obtained by selecting any of the above-mentioned dibasic acids and the above-mentioned glycols and esterifying them by a known method.

Although not particularly limited, suitable examples of the biodegradable constitutional unit include a constitutional unit expressed by the following formula (3A) and a constitutional unit expressed by the following formula (3B).

[Chemical Formula 8]

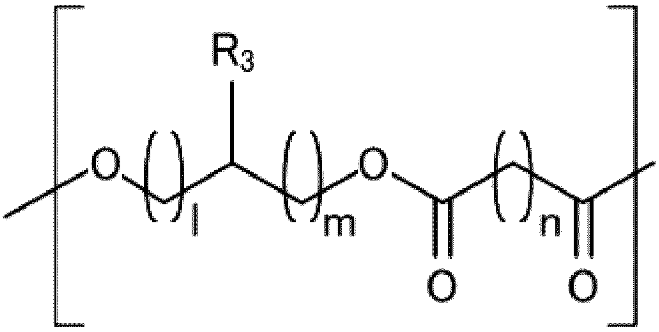

Formula (3A)

[Chemical Formula 9]

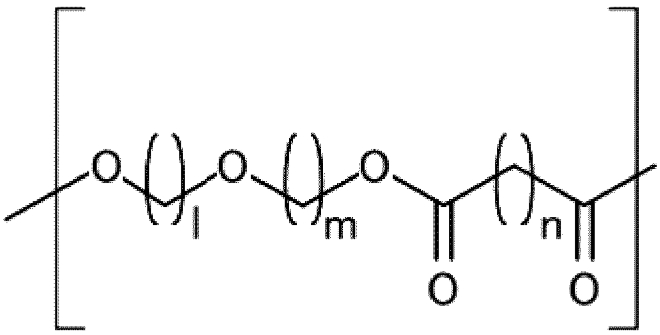

Formula (3B)

(In the formula (3A) and the formula (3B), $R_3$ represents a hydrogen atom or a methyl group, l and m each independently represent an integer from 0 to 4 and l + m is 1 or more, and n represents an integer from 4 to 8.)

In the formula (3A), $R_3$ is preferably a methyl group, l and m are preferably each independently an integer 1 or 2, and n is preferably an integer from 4 to 8.

To form the polymer (x) being biodegradable, the following dibasic acid (I-a) among the above-mentioned dibasic acids is preferably used.

The dibasic acid (I-a) to form the polymer (x) being biodegradable is preferably at least one selected from the group consisting of adipic acid, azelaic acid, and sebacic acid.

Furthermore, to form the biodegradable polymer (x), the following glycol (I-b) among the above-mentioned glycols is preferably used.

The glycol (I-b) to form the polymer (x) being biodegradable is preferably at least one selected from the group consisting of ethylene glycol, diethylene glycol, 1,2-propylene glycol, 1,3-propylene glycol, 2-methyl-1,3-propanediol, 1,3-butanediol, 1,4-butanediol, 1,5-pentanediol, 3-methyl-1,5-pentanediol, 1,6-hexanediol, and 1,9-nonanediol.

The biodegradable constitutional unit in the polymer (x) is preferably at least one selected from the group consisting of

a constitutional unit derived from a structure in which ethylene glycol and adipic acid are bound to each other, a constitutional unit derived from a structure in which diethylene glycol and adipic acid are bound to each other, a constitutional unit derived from a structure in which 1,2-propylene glycol and adipic acid are bound to each other, a constitutional unit derived from a structure in which 1,3-propylene glycol and adipic acid are bound to each other, a constitutional unit derived from a structure in which 2-methyl-1,3-propanediol and adipic acid are bound to each other, a constitutional unit derived from a structure in which 1,3-butanediol and adipic acid are bound to each other, a constitutional unit derived from a structure in which 1,4-butanediol and adipic acid are bound to each other, a constitutional unit derived from a structure in which 1,5-pentanediol and adipic acid are bound to each other, a constitutional unit derived from a structure in which 3-methyl-1,5-pentanediol and adipic acid are bound to each other, a constitutional unit derived from a structure in which 1,6-hexanediol and adipic acid are bound to each other, a constitutional unit derived from a structure in which 1,9-nonanediol and adipic acid are bound to each other,

a constitutional unit derived from a structure in which ethylene glycol and sebacic acid are bound to each other, a

constitutional unit derived from a structure in which diethylene glycol and sebacic acid are bound to each other, a constitutional unit derived from a structure in which 1,2-propylene glycol and sebacic acid are bound to each other, a constitutional unit derived from a structure in which 1,3-propylene glycol and sebacic acid are bound to each other, a constitutional unit derived from a structure in which 2-methyl-1,3-propanediol and sebacic acid are bound to each other, a constitutional unit derived from a structure in which 1,3-butanediol and sebacic acid are bound to each other, a constitutional unit derived from a structure in which 1,4-butanediol and sebacic acid are bound to each other, a constitutional unit derived from a structure in which 1,5-pentanediol and sebacic acid are bound to each other, a constitutional unit derived from a structure in which 3-methyl-1,5-pentanediol and sebacic acid are bound to each other, a constitutional unit derived from a structure in which 1,6-hexanediol and sebacic acid are bound to each other, a constitutional unit derived from a structure in which 1,9-nonanediol and sebacic acid are bound to each other,

a constitutional unit derived from a structure in which ethylene glycol, 1,6-hexanediol, and adipic acid are bound to each other, a constitutional unit derived from a structure in which ethylene glycol, 1,6-hexanediol, 2-methyl-1,3-propanediol, and adipic acid are bound to each other,

a constitutional unit derived from a structure in which ethylene glycol, diethylene glycol, and adipic acid are bound to each other, a constitutional unit derived from a structure in which ethylene glycol, diethylene glycol, 2-methyl-1,3-propanediol, and adipic acid are bound to each other,

a constitutional unit derived from a structure in which ethylene glycol and sebacic acid are bound to each other, a constitutional unit derived from a structure in which ethylene glycol, 2-methyl-1,3-propanediol, adipic acid, and sebacic acid are bound to each other, and a constitutional unit derived from a structure in which ethylene glycol, 2-methyl-1,3-propanediol, adipic acid, and sebacic acid are bound to each other.

In particular, the biodegradable constitutional unit in the polymer (x) is more preferably any one of the constitutional unit derived from the structure in which 2-methyl-1,3-propanediol and adipic acid are bound to each other, the constitutional unit derived from the structure in which 2-methyl-1,3-propanediol and sebacic acid are bound to each other, and the constitutional unit derived from the structure in which 3-methyl-1,5-pentanediol and adipic acid are bound to each other.

Examples of the constitutional unit specifically expressed by a structural formula include constitutional units expressed by the following formulae (3-1) to (3-3).

[Chemical Formula 10]

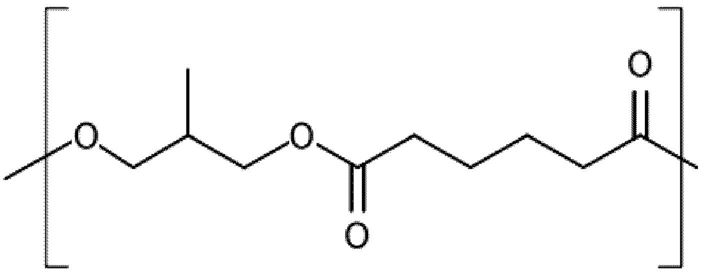

Formula (3-1)

[Chemical Formula 11]

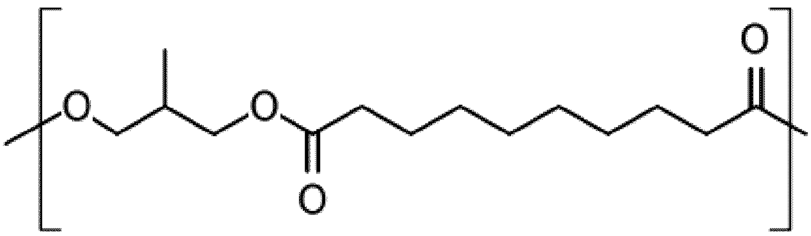

Formula (3-2)

[Chemical Formula 12]

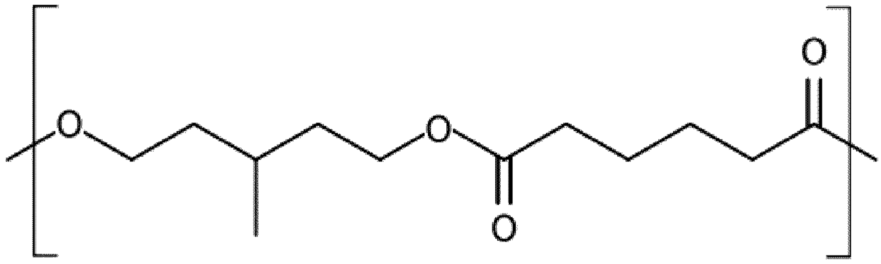

Formula (3-3)

<Polymer (y) including non-biodegradable constitutional unit>

The polymer (y) includes a non-biodegradable constitutional unit. The non-biodegradable constitutional unit included in the polymer (y) to be used may include one type or a combination of two or more types.

The non-biodegradable constitutional unit is not limited to a particular one as long as the non-biodegradable constitutional unit is non-biodegradable and can form a copolymer with a biodegradable constitutional unit.

The dibasic acid and the glycol to be used for the formation of the polymer (y) are the dibasic acids and the glycols listed in the section "Polymer (x) including biodegradable constitutional unit".

Depending on a combination of the type of the dibasic acid and the type of glycol, the structures resulting from the binding have different values of degradation rate in seawater, and therefore, to form the polymer (y) being non-biodegradable, the preferred types of dibasic acid and glycol are beneficially suitably selected from the above-mentioned dibasic acids and glycols so that a structure resulting from the binding has a degradation rate in seawater of less than 15%.

The non-biodegradable constitutional unit is not limited to a particular one, but preferably includes a constitutional unit derived from a structure in which glycol and a dibasic acid other than the dibasic acid expressed by the formula (1) described in the section "Polymer (x) including biodegradable constitutional unit".

The non-biodegradable constitutional unit is not limited to a particular one, but examples thereof include a constitutional unit derived from butylene succinate and a constitutional unit derived from butylene adipate terephthalate. Among them, the non-biodegradable constitutional unit in the polymer (y) is preferably any one of a butylene succinate-derived constitutional unit expressed by the following formula (4-1) (corresponding to a constitutional unit derived from a structure in which 1,4-butanediol and succinic acid are bound to each other) and a butylene adipate terephthalate-derived constitutional unit expressed by the formula (4-2) (corresponding to a constitutional unit derived from a structure in which 1,4-butanediol, adipic acid, and terephthalic acid are bound to each other).

[Chemical Formula 13]

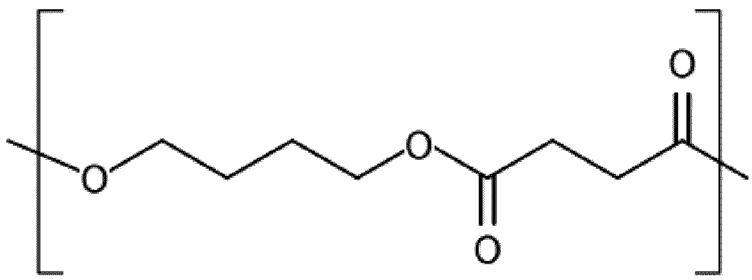

Formula (4-1)

[Chemical Formula 14]

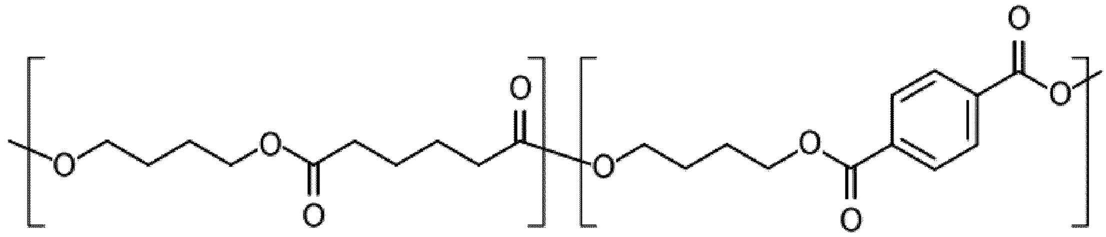

Formula (4-2)

<Optional polymer including other constitutional units>

The copolyester resin according to the present invention may include any polymer including a constitutional unit other than those mentioned above, as necessary, to the extent that the effect of the present invention is not hindered.

The copolyester resin according to the present invention is a block copolymer including the biodegradable block (X) and the non-biodegradable block (Y), and is obtained by copolymerizing the polymer (x) including the above-mentioned biodegradable constitutional unit and the polymer (y) including the above-mentioned non-biodegradable constitutional unit.

Although not particularly limited, preferred examples of the copolyester resin according to the present invention include copolyester resins expressed by the following formulae (5) to (8).

[Chemical Formula 15]

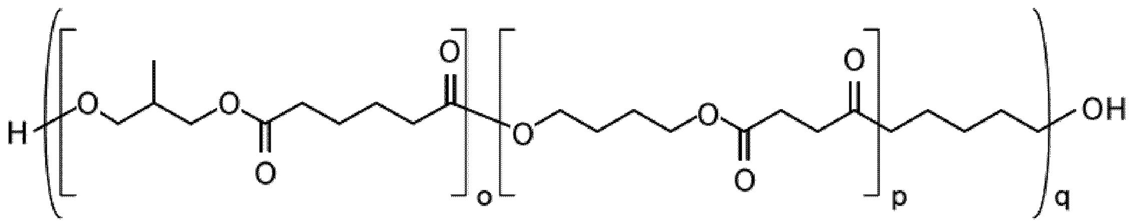

Formula (5)

(In the formula (5), o, p, and q each independently represent a positive integer.)

[Chemical Formula 16]

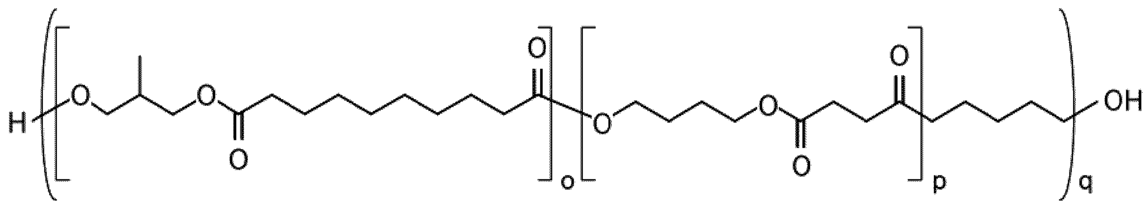

Formula (6)

(In the formula (6), o, p, and q each independently represent a positive integer.)

[Chemical Formula 17]

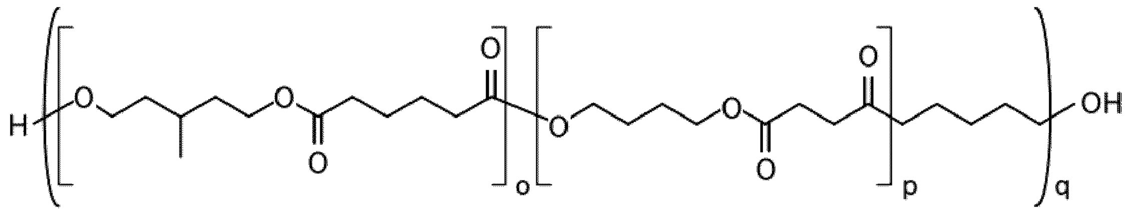

Formula (7)

(In the formula (7), o, p, and q each independently represent a positive integer.)

[Chemical Formula 18]

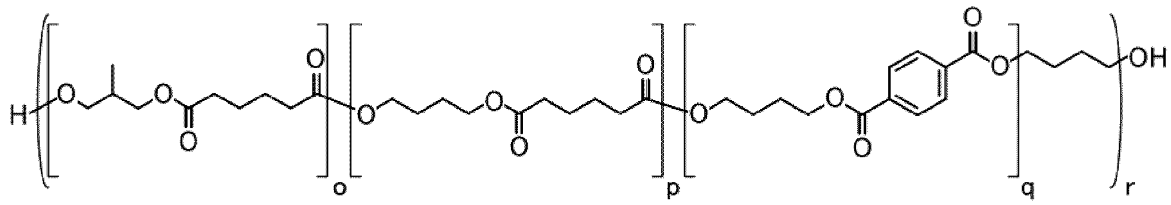

Formula (8)

(In the formula (8), o, p, q and r each independently represent a positive integer.)

From the viewpoint of achieving sufficient biodegradability, the content of the biodegradable block (X) constituting the copolyester resin is preferably 5% by mass or higher, more preferably 10% by mass or higher with respect to the copolyester resin (100% by mass). On the other hand, from the viewpoint of achieving sufficient thermoformability, the content of the biodegradable block (X) is preferably 50% by mass or lower, more preferably 45% by mass or lower. Any combination of these upper and lower limits may be used. The content of the biodegradable block (X) is preferably 5% by mass or higher and 50% by mass or lower, more preferably 10% by mass or higher and 45% by mass or lower.

From the viewpoint of achieving sufficient thermoformability, the content of the non-biodegradable block (Y) constituting the copolyester resin is preferably 50% by mass or higher, more preferably 55% by mass or higher with respect to the copolyester resin (100% by mass). On the other hand, from the viewpoint of achieving sufficient biodegradability, the content of the non-biodegradable block (Y) is preferably 95% by mass or lower, more preferably 90% by mass or lower. Any combination of these upper and lower limits may be used. The content of the non-biodegradable block (Y) is preferably 50% by mass or higher and 95% by mass or lower, more preferably 55% by mass or higher and 90% by mass or lower.

From the viewpoint of achieving sufficient biodegradability, the molar ratio (X/Y) of the biodegradable block (X) to the non-biodegradable block (Y) is 1/99 or higher, preferably 5/95 or higher, more preferably higher than 5/95, still more preferably 10/90 or higher, particularly preferably 15/85 or higher. On the other hand, from the viewpoint of achieving sufficient thermoformability, the molar ratio (X/Y) is 95/5 or lower, preferably 80/20 or lower, more preferably 70/30 or lower, particularly 50/50 or lower. Any combination of these upper and lower limits may be used. The molar ratio (X/Y) is 1/99 or higher and 95/5 or lower, preferably 5/95 or higher and 95/5 or lower, more preferably higher than 5/95 and 95/5 or lower, still more preferably 10/90 or higher and 80/20 or lower, still more preferably 15/85 or higher and 70/30 or lower, particularly preferably 15/85 or higher and 50/50 or lower.

From the viewpoint of achieving sufficient biodegradability, the average chain length of the biodegradable block (X) is longer than 1.2, preferably 4.0 or longer, more preferably 4.2 or longer, still more preferably 5.0 or longer, particularly preferably 5.5 or longer. On the other hand, from the viewpoint of achieving sufficient thermoformability, the average chain length of the biodegradable block (X) is preferably 30 or shorter, more preferably 20 or shorter, still more preferably 15 or shorter. Any combination of these upper and lower limits may be used. The average chain length of the biodegradable block (X) is longer than 1.2 and 30 or shorter, preferably 4.0 or longer and 30 or shorter, more preferably 4.2 or longer and 20 or shorter, still more preferably 5.0 or longer and 20 or lower, particularly preferably 5.5 or longer and 15 or shorter.

From the viewpoint of achieving sufficient thermoformability, the average chain length of the polymer block (Y) is preferably 4.0 or longer, more preferably 4.2 or longer, still more preferably 5.0 or longer. On the other hand, from the viewpoint of achieving sufficient biodegradability, the average chain length of the polymer block (Y) is preferably 40.0 or shorter, more preferably 35 or shorter, still more preferably 30.0 or shorter. Any combination of these upper and lower limits

may be used. The average chain length of the polymer block (Y) is preferably 4.0 or longer and 40.0 or shorter, more preferably 4.2 or longer and 35 or shorter, still more preferably 5.0 or longer and 30.0 or shorter.

From the viewpoint of processability and handling easiness, the number average molecular weight (Mn) of the copolyester resin that is measured by gel permeation chromatography (GPC) in terms of polystyrene is preferably 5,000 or higher, more preferably 7,000 or higher, still more preferably 8,000 or higher, particularly preferably 10,000 or higher. On the other hand, from the viewpoint of achieving sufficient biodegradability, the number average molecular weight (Mn) of the copolyester resin is preferably 150,000 or lower, more preferably 100,000 or lower, still more preferably 70,000 or lower, particularly preferably 50,000 or lower. Any combination of these upper and lower limits may be used. The number average molecular weight (Mn) of the copolyester resin is preferably 5,000 or higher and 150,000 or lower, preferably 5,000 or higher and 100,000 or lower, more preferably 7,000 or higher and 100,000 or lower, more preferably 7,000 or higher and 70,000 or lower, still more preferably 10,000 or higher and 70,000 or lower, still more preferably 8,000 or higher and 50,000 or lower.

From the viewpoint of processability and handling easiness, the weight average molecular weight (Mw) of the copolyester resin that is measured by gel permeation chromatography (GPC) in terms of polystyrene is preferably 7,000 or higher, more preferably 10,000 or higher, still more preferably 15,000 or higher, particularly preferably 20,000 or higher. On the other hand, from the viewpoint of achieving sufficient biodegradability, the weight average molecular weight (Mw) of the copolyester resin is preferably 200,000 or lower, more preferably 150,000 or lower, still more preferably 100,000 or lower. Any combination of these upper and lower limits may be used. The weight average molecular weight (Mw) of the copolyester resin is preferably 7,000 or higher and 200,000 or lower, preferably 10,000 or higher and 200,000 or lower, more preferably 10,000 or higher and 150,000 or lower, more preferably 15,000 or higher and 150,000 or lower, still more preferably 15,000 or higher and 100,000 or lower, still more preferably 20,000 or higher and 100,000 or lower.

From the viewpoint of achieving a resin having low dispersion and desired characteristics, the molecular weight distribution (Mw/Mn) of the copolyester resin, which is obtained by dividing a value of the weight average molecular weight (Mw) measured by GPC in terms of polystyrene by a value of the number average molecular weight (Mn), is preferably 4.5 or less, more preferably 4.0 or less, still more preferably 3.7 or less, particular preferably 3.5 or less.

From the viewpoint of biodegradability, the randomness of the copolyester resin is preferably 0.07 or more, more preferably 0.09 or more. On the other hand, from the viewpoint of thermoformability, the randomness of the copolyester resin is preferably 1.0 or less, more preferably 0.9 or less. Any combination of these upper and lower limits may be used. The randomness of the copolyester resin is preferably 0.07 or more and 1.0 or less, more preferably 0.09 or more and 0.9 or less.

The melting point (Tm) of the copolyester resin is preferably 40°C or higher, more preferably 65°C or higher, more preferably 70°C or higher, still more preferably 95°C or higher, still more preferably 100°C or higher, particularly preferably 102°C or higher. On the other hand, the upper limit of the thermal decomposition temperature of the copolyester resin is not particularly limited, but is usually 250°C or lower. When the melting point is within the above-mentioned range, thermal processability during molding becomes excellent.

The copolyester resin needs to be "biodegradable" as referred in the present invention and therefore the biodegradation rate of the copolyester resin in seawater environments is 15% or higher, and furthermore, the degradation rate in seawater is more preferably 24% or higher, still more preferably 40% or higher, particularly preferably 50% or higher.

Inoculum source: Seawater collected in the coastal area of Akane Bay (around Akanehama, Narashino City, Chiba Prefecture, Japan) was used as a collected inoculum source.

Biodegradability measurement method: Soda lime (a carbon dioxide absorbent) and a pressure sensor (OxiTop-IDS (registered trademark), manufactured by WTW) are attached to a test bottle, and biological oxygen demand (BOD) is measured under the following conditions to calculate biodegradability.

Incubation temperature: 27°C, at dark place
Incubation period: 28 days

Calculation of biodegradability:

The biodegradability of a sample is calculated based on the following formula.

$$\text{Biodegradability (\%)} = (BOD0-BODB)/ThOD\times 100$$

BOD0: Biochemical Oxygen Demand of sample (measured value: mg)
BODB: Average Biochemical Oxygen Demand in blank test (measured value: mg)
ThOD: Theoretical Oxygen Demand necessary for complete oxidation of sample (calculated value: mg)

The biodegradability of the copolyester resin in freshwater environments is preferably 15% or higher, more preferably 24% or higher, still more preferably 40% or higher, particularly preferably 50% or higher.
In the present specification, the biodegradability of the copolyester resin in a freshwater environment is a value calculated by the same method as for the above-described biodegradability in seawater, except that the inoculum source is river water collected from the Ina River (around Momozono, Ikeda City, Hyogo Prefecture).
The biodegradability of the copolyester resin in soil environments is preferably 15% or higher, more preferably 24% or higher, still more preferably 40% or higher, particularly preferably 50% or higher.
In the present specification, the biodegradability of the copolyester resin in a soil environment is a value calculated by the same method as for the above-described biodegradability in seawater, except that the inoculum source is soil collected from the Oshinozuka Community Farm (around Oshinozuka, Sakura City, Chiba Prefecture).
The compost degradation rate of the copolyester resin under composting conditions is preferably 15% or higher, more preferably 24% or higher, still more preferably 40% or higher, particularly preferably 50% or higher.
In the present specification, the compost degradation rate of the copolyester resin under the composting conditions is a value determined using a method according to JIS K6953-1:2011.

Incubation temperature: 58°C
Incubation period: 28 days

<Copolyester resin having triad units, unit (A) and unit (B)>

The copolyester resin according to the present invention preferably includes two types of biodegradable triad units (a unit (A) and a unit (B)).
Of the two types of biodegradable triad units included in the copolyester resin according to the present invention, one unit (the unit (A)) is a unit derived from a structure expressed by "first glycol/dibasic acid/first glycol" in which first glycols and a dibasic acid are bound to each other. The other unit (the unit (B)) is a unit derived from a structure expressed by "second glycol/dibasic acid/second glycol" in which second glycols different from the first glycols and a dibasic acid are bound to each other.
Examples of a preferred combination of the two types of biodegradable triad units (the unit (A) and the unit (B)) included in the copolyester resin according to the present invention include any one of the following (i) to (iii):

(i) the unit (A) is any one of a triad unit derived from "a structure in which 2-methyl-1,3-propanediol, adipic acid, and 2-methyl-1,3-propanediol are bound to each other" and the unit (B) is a triad unit derived from "a structure in which 1,4-butanediol, adipic acid, and 1,4-butanediol are bound to each other";
(ii) the unit (A) is a triad unit derived from "a structure in which 2-methyl-1,3-propanediol, sebacic acid, and 2-methyl-1,3-propanediol are bound to each other" and the unit (B) is a triad unit derived from "a structure in which 1,4-butanediol, sebacic acid, and 1,4-butanediol are bound to each other"; and
(iii) the unit (A) is a triad unit derived from "a structure in which 3-methyl-1,5-pentanediol, adipic acid, and 3-methyl-1,5-pentanediol are bound to each other" and the unit (B) is a triad unit derived from "a structure in which 1,4-butanediol, adipic acid, and 1,4-butanediol are bound to each other".

(Method for producing copolyester resin)

The copolyester resin according to the present invention can be produced using a common production method for copolyester resin, but a polytransesterification reaction is preferably used from the viewpoint that a copolyester resin having a desired average chain length can be easily obtained.
The method for producing the copolyester resin according to the present invention is a method for producing a copolyester resin, the copolyester resin including a combination of a biodegradable block (X) derived from a polymer (x) including a biodegradable constitutional unit and a non-biodegradable block (Y) derived from a polymer (y) including a non-biodegradable constitutional unit, the method including subjecting the polymer (x) and the polymer (y) to a transesterification reaction and thereby obtaining a block copolymer including the biodegradable block (X) and the non-biodegradable block (Y).
Examples of a preferred embodiment of the method for producing the copolyester resin according to the present invention include a production method, the production method including:

performing polycondensation of hydroxyalkanoic acid or dibasic acid and glycol to synthesize the polymer (x) including a biodegradable constitutional unit;
synthesizing the polymer (y) including a non-biodegradable constitutional unit; and
subjecting the polymer (x) and the polymer (y) to a transesterification reaction and thereby obtaining a block

copolymer including the biodegradable block (X) and the non-biodegradable block (Y).

<Step of synthesizing polymer (x) and polymer (y)>

A method for synthesizing the polymer (x) and the polymer (y) is not particularly limited and the synthesis can be performed using a common synthesis method for polyester resin. Hereinafter, for example, a case will be described in which the polymer (y) is a polyester resin including a constitutional unit derived from a structure in which a dibasic acid other than the dibasic acid expressed by the above-mentioned formula (1) and glycol are bound to each other.

The dibasic acid and glycol as raw materials for the synthesis of the polymer (x) or the polymer (y) can be those described in the section of the polymer (x) including a biodegradable constitutional unit or the polymer (y) including a non-biodegradable constitutional unit.

The raw materials for the synthesis of the polymer (x) or the polymer (y) may optionally include other raw materials except dibasic acid and glycol. The other raw materials are not limited to particular ones, but examples thereof include trivalent or more polyhydric alcohols and trivalent or more polyhydric carboxylic acids.

The formulation ratio of the dibasic acid to glycol is not particularly limited, but is preferably 90:10 to 50:50, more preferably 80:20 to 50:50 in terms of mass ratio (dibasic acid:glycol).

The reaction may be performed without a catalyst or may be performed in the presence of a catalyst. Examples of the catalyst to be used for the reaction include an acid catalyst. Examples of the acid catalyst include tin-based catalysts such as monobutyl-tin oxide and dibutyl-tin oxide, titanium-based catalysts such as titanium tetraisopropoxide and titanyl-acetylacetonate, and zirconia-based catalysts such as tetra-butyl-zirconate. A titanium-based catalyst is preferably used because of its ability to enhance the activity of a transesterification reaction and an esterification reaction. Examples of the titanium-based catalyst include titanium tetramethoxide, titanium tetraethoxide, titanium tetraisopropoxide, titanium tetra-n-propoxide, titanium tetra-n-butoxide, tetrakis(2-ethylhexyloxy)titanium, and tetrastearyloxytitanium. Titanium tetraisopropoxide is preferably used from the viewpoint of stability in handling and activity as a catalyst.

The amount of the catalyst used is usually within a range of 0.001% to 5.0% by mass with respect to the total mass of the dibasic acid and glycol.

The reaction for the synthesis of the polymer (x) or the polymer (y) results in the generation of water, lower alcohols, and the like as by-products. The by-products are removed from a reaction system during the reaction process to easily accelerate the condensation reaction.

The reaction temperature is not particularly limited, but is usually within a range of 50°C to 300°C. The reaction atmosphere may be the air or an inert gas atmosphere such as nitrogen gas or argon gas. Although the reaction time is usually from 1 to 48 hours, the reaction is preferably allowed to progress until no more dibasic acid or glycol as the raw material remains in the reaction system. The progress of the reaction can be tracked, for example, by the acid value measurement of a decrease in dibasic acid.

<Step of producing copolyester resin by transesterification reaction>

A polymer synthesis method by a transesterification reaction is not particularly limited, but the synthesis can be performed using a common polymer synthesis method by a transesterification reaction.

A titanium-based catalyst is preferably used as the catalyst for the transesterification reaction. Examples of the titanium-based catalyst include titanium tetramethoxide, titanium tetraethoxide, titanium tetraisopropoxide, titanium tetra-n-propoxide, titanium tetra-n-butoxide, tetrakis(2-ethylhexyloxy)titanium, and tetrastearyloxytitanium. Titanium tetraisopropoxide is preferably used from the viewpoint of stability in handling and activity as a catalyst.

The amount of the catalyst used is usually within a range of 0.001% to 5.0% by mass with respect to the total mass of the polymer (x) and the polymer (y).

The reaction temperature is not limited to a particular one, but is usually within a range of 50°C to 300°C. The reaction atmosphere may be the air or an inert gas atmosphere such as nitrogen gas or argon gas.

The reaction time is usually 1 to 48 hours.

(Polyurethane)

Examples of an embodiment of the copolyester resin obtained as described above include polyurethane.

The polyurethane is obtained by allowing the copolyester according to the present invention to react with polyisocyanate. Polyol other than the copolyester, a chain extender, a chain stopper, and a chemical cross-linking agent may be used in combination with the copolyester as needed.

Specifically, the polyurethane is obtained by allowing polyol to react with polyisocyanate, and at least the copolyester according to the present invention is used as the polyol. Thus, the polyurethane is a reaction product obtained by a reaction between the polyol and the polyisocyanate, and the polyurethane includes a structural unit derived from the

polyol and a structural unit derived from the polyisocyanate, and includes at least a structural unit derived from the copolyester according to the present invention.

The copolyester according to the present invention is preferably polyester polyol.

Examples of the polyester polyol include condensation-based polyester polyol. The condensation-based polyester polyol is, for example, a reaction product of: a low molecular weight polyhydric alcohol (a low molecular weight polyol, such as ethylene glycol (EG), diethylene glycol, propylene glycol (PG), dipropylene glycol, (1,3- or 1,4-)butanediol, pentanediol, neopentyl glycol, hexanediol, cyclohexanedimethanol, glycerin, 1,1,1-trimethylolpropane (TMP), 1,2,5-hexanetriol, or pentaerythritol, or sugar such as sorbitol); and a polybasic carboxylic acid (such as glutaric acid, adipic acid, azelaic acid, fumaric acid, maleic acid, pimelic acid, suberic acid, sebacic acid, phthalic acid, terephthalic acid, isophthalic acid, dimer acid, pyromellitic acid, or oligomeric acid).

Examples of the chain extender that can be used include aliphatic polyol compounds, such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, sorbitol, and neopentyl glycol; aromatic polyol compounds, such as bisphenol A, 4,4'-dihydroxydiphenyl, 4,4'-dihydroxydiphenyl ether, 4,4'-dihydroxydiphenylsulfone, hydrogenated bisphenol A, and hydroquinone; water; and amine compounds, such as ethylenediamine, 1,2-propanediamine, 1,6-hexamethylenediamine, piperazine, 2-methylpiperazine, 2,5-dimethylpiperazine, isophorondiamine , 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, hydrazine, diethylenetriamine, triethylenetetetramine, and isophoronediamine. These chain extenders may be used alone or in combination of two or more. Among them, aliphatic polyol compounds are preferably used, and neopentyl glycol is more preferably used.

The content of the copolyester according to the present invention in 100% by mass of the polyol is preferably 10% to 100% by mass, more preferably 50% to 100% by mass.

Examples of the polyisocyanate include: aromatic polyisocyanates, such as 1,3- and 1,4-phenylene diisocyanates, 1-methyl-2,4-phenylene diisocyanate, 1-methyl-2,6-phenylene diisocyanate, 1-methyl-2,5-phenylene diisocyanate, 1-methyl-2,6-phenylene diisocyanate, 1-methyl-3,5-phenylene diisocyanate, 1-ethyl-2,4-phenylene diisocyanate, 1-isopropyl-2,4-phenylene diisocyanate, 1,3-dimethyl-2,4-phenylene diisocyanate, 1,3-dimethyl-4,6-phenylene diisocyanate, 1,4-dimethyl-2,5-phenylene diisocyanate, diethylbenzene diisocyanate, diisopropylbenzene diisocyanate, 1-methyl-3,5-diethylbenzene diisocyanate, 3-methyl-1,5-diethylbenzene-2,4-diisocyanate, 1,3,5-triethylbenzene-2,4-diisocyanate, naphthalene-1,4-diisocyanate, naphthalene-1,5-diisocyanate, 1-methylnaphthalene-1,5-diisocyanate, naphthalene-2,6-diisocyanate, naphthalene-2,7-diisocyanate, 1,1-dinaphthyl-2,2'-diisocyanate, biphenyl-2,4'-diisocyanate, biphenyl-4,4'-diisocyanate, 3-3'-dimethylbiphenyl-4,4'-diisocyanate, 4,4'-diphenylmethane diisocyanate, 2,2'-diphenylmethane diisocyanate, diphenylmethane-2,4-diisocyanate, and toluene diisocyanate; aliphatic polyisocyanates, such as tetramethylene diisocyanate, 1,6-hexamethylene diisocyanate, dodecamethylene diisocyanate, and trimethylhexamethylene diisocyanate; and alicyclic polyisocyanates, such as 1,3-cyclopentylene diisocyanate, 1,3-cyclohexylene diisocyanate, 1,4-cyclohexylene diisocyanate, 1,3-di(isocyanate methyl)cyclohexane, 1,4-di(isocyanate methyl)cyclohexane, lysine diisocyanate, isophorone diisocyanate, 4,4'-dicyclohexylmethane diisocyanate, 2,4'-dicyclohexylmethane diisocyanate, 2,2'-dicyclohexylmethane diisocyanate, and 3,3'-dimethyl-4,4'-dicyclohexylmethane diisocyanate. These polyisocyanates may be used alone or in combination of two or more. Among them, 1,6-hexamethylene diisocyanate, isophorone diisocyanate, 4,4'-diphenylmethane diisocyanate, and toluene diisocyanate are more preferably used.

For the purpose of controlling the molecular weight of polyurethane to be obtained, a chain stopper having a single active hydrogen group can be used as necessary. Examples of the chain stopper include: aliphatic monohydroxy compounds having a hydroxyl group, such as methanol, ethanol, propanol, butanol, and hexanol; and aliphatic monoamines having an amino group, such as morpholine, diethylamine, dibutylamine, monoethanolamine, and diethanolamine. These chain stoppers may be used alone, or two or more of them may be mixed and used.

For the purpose of enhancing the heat resistance and strength of polyurethane to be obtained, a cross-linking agent having three or more active hydrogen groups or isocyanate groups can be used as necessary.

The polyurethane can be obtained by a known polyurethane production method. Specific examples of the production method include a method in which polyol, polyisocyanate, and the above-mentioned chain extender are fed and subjected to a reaction to produce polyurethane. The reaction is preferably carried out, for example, at a temperature of 50°C to 100°C for 3 to 10 hours. The reaction may also be performed in an organic solvent.

Examples of the organic solvent that can be used include: ketone solvents, such as N,N-dimethylformamide, N,N-dimethylacetamide, N-methyl-2-pyrrolidone, methyl ethyl ketone, methyl-n-propyl ketone, acetone, and methyl isobutyl ketone; and ester solvents, such as methyl formate, ethyl formate, propyl formate, methyl acetate, ethyl acetate, isopropyl acetate, isobutyl acetate, isobutyl acetate, and sec-butyl acetate. These organic solvents may be used alone or in combination of two or more.

The content of a structural unit derived from the copolyester according to the present invention in 100% by mass of the polyurethane is preferably 10% to 98% by mass, more preferably 20% to 98% by mass. Thus, an effect tends to be

more preferably achieved.

In the present specification, the content of each constitutional unit in the polyurethane is measured by NMR.

The lower limit of the number average molecular weight (Mn) of the polyurethane may be 5,000 or higher, 6,000 or higher, 7,000 or higher, 8,000 or higher, 10,000 or higher, and the upper limit thereof may be 1,000,000 or lower, 500,000 or lower, 100,000 or lower, 50,000 or lower, 15,000 or lower. Any combination of these upper and lower limits may be used.

The number average molecular weight (Mn) of the polyurethane may be 5,000 to 1,000,000, 6,000 to 500,000, 7,000 to 100,000, 8,000 to 50,000, or 10,000 to 15,000.

Within the above-mentioned range, the effect tends to be more preferably achieved. In the present specification, the number average molecular weight (Mn) of the polyurethane is a value measured by GPC.

(Resin composition)

Examples of a resin composition of the present embodiment include the above-mentioned copolyester of the present embodiment, thermoplastic resin compositions including polyurethane, and thermosetting resin compositions.

<Thermoplastic resin composition>

In the case where the resin composition of the present embodiment is a thermoplastic resin composition, for example, another type of resin, a crystallization nucleating agent, a thermal stabilizer, a hydrolysis inhibitor, and other additives may be included as necessary.

<<Crystallization Nucleating Agent>>

The crystallization nucleating agent to be used in the thermoplastic resin composition of the present embodiment may be any crystallization nucleating agent to be used for a thermoplastic resin derived from a biomass resource such as polylactic acid or polybutylene succinate. For example, a talc-based nucleating agent, a nucleating agent including a metal-salt-based material having a phenyl group, and a nucleating agent including a benzoyl compound are preferably used. Other known crystallization nucleating agents, such as lactate-, benzoate-, silica-, and phosphate-based crystallization nucleating agents, may be used.

<<Heat stabilizer and Hydrolysis inhibitor>>

The thermoplastic resin composition of the present embodiment preferably includes a phenolic antioxidant or a phosphite antioxidant as a heat stabilizer for the resin composition, and preferably includes a carbodiimide compound-based hydrolysis inhibitor, such as polycarbodiimide resin (trade name: CARBODILITE, manufactured by Nisshinbo Chemical Inc). The heat stabilizer and the hydrolysis inhibitor to be added may be one selected from the above-mentioned three additives, but the above-mentioned two heat stabilizers and the above-mentioned hydrolysis inhibitor each have a different function, and therefore all the additives are preferably added. The amount of each of the heat stabilizers and the hydrolysis inhibitor added varies depending on the type, but is commonly preferably approximately 0.1 to 5 parts by mass with respect to 100 parts by mass of the thermoplastic resin composition.

<<Other additives>>

To the thermoplastic resin composition of the present embodiment, a silicone-based flame retardant, an organometallic salt-based flame retardant, an organophosphorus flame retardant, a metal oxide-based flame retardant, or a metal hydroxide-based flame retardant is preferably further added. Thus, flame retardancy is enhanced to substantially prevent the spread of fire, and the flowability of the biodegradable resin composition is enhanced to ensure more excellent formability.

A filler can be added to the thermoplastic resin composition of the present embodiment. Examples of the filler include talc, mica, montmorillonite, and kaolin. These fillers act as crystal nuclei to promote crystallization of the copolyester, whereby the impact strength and heat resistance of a molded article are enhanced. Furthermore, the rigidity of the molded article can be increased.

The thermoplastic resin composition of the present embodiment may be suitably blended with various additives, such as an antioxidant, an antiblocking agent, a colorant, a flame retardant, a mold release agent, an antifogging agent, a surface wettability improver, an incineration aid, a lubricant, a dispersion aid, various surfactants, a plasticizer, a copatibilizer, a weather-resistance improver, an ultraviolet absorber, a processing aid, an antistatic agent, a colorant, a lubricant, and a mold release agent. As the plasticizer, a known plasticizer that is generally used as a plasticizer for polymers can be used without any particular limit. Examples of the plasticizer include a polyester plasticizer, a glycerin-based plasticizer, a polycarboxylic acid ester-based plasticizer, a polyalkylene glycol-based plasticizer, and an epoxy-based plasticizer. The compatibilizer is not particularly limited as long as the compatibilizer functions as a compatibilizer for the copolymer A and the copolymer B. Examples of the compatibilizer include an inorganic filler, a glycidyl compound, a polymer compound grafted or copolymerized with acid anhydride, and an organometallic compound. One or two or more of these compatibilizers may be used. When the above-mentioned compositions are mixed and kneaded, heat resistance, bending strength, impact strength, flame retardancy, and the like are improved, and therefore, application to a molded article, such as casing for electronic devices typified by notebook computers and cellular phones, is promoted.

Various types of conventional known fillers can be blended as the filler. As a functional additive, for example, a compound fertilizer, a soil conditioner, or a plant activator can be added. The fillers are broadly classified into inorganic fillers and organic fillers. These can be used alone or in the form of a mixture of two or more of them.

Examples of the inorganic filler include: silicates, such as anhydrous silica, mica, talc, titanium oxide, calcium carbonate, diatomaceous earth, alophene, bentonite, potassium titanate, zeolite, sepiolite, smectite, kaolin, kaolinite, glass, limestone, carbon, warastainite, calcined pearlite, calcium silicate, and sodium silicate; hydroxides, such as aluminum oxide, magnesium carbonate, and calcium hydroxide; salts, such as ferric carbonate, zinc oxide, iron oxide, aluminum phosphate, and barium sulfate. The content of the inorganic filler in the entirety of the composition is usually 1% to 80% by weight, preferably 3% to 70% by weight, more preferably 5% to 60% by weight.

Examples of the organic filler include raw starch, processed starch, pulp, chitin/chitosan, coconut shell powder, wood powder, bamboo powder, bark powder, and powders of kenaf and straw. These can be used alone or in the form of a mixture of two or more of them. The amount of the organic filler added in the entirety of the composition is typically 0.01% to 70% by weight.

For the preparation of the composition, any conventionally known mixing/kneading technique can be applied. Examples of a mixer that can be used include blenders, such as a horizontal-cylindrical mixer, a V-shaped mixer, a double-conical mixer, a ribbon blender, and a super mixer, and various continuous mixers. Examples of a kneader that can be used include batch-type mixers such as a roll mixer and an internal mixer, a one-stage or two-stage continuous mixer, a twin-screw extruder, and a single-screw extruder. Examples of a kneading method include a method in which various additives, the filler, and the thermoplastic resin are each heated and melted, and then added and blended. Blending oils or the like can be used to uniformly disperse the above-mentioned various additives.

<Thermosetting resin composition>

When the resin composition of the present embodiment is a thermosetting resin composition, the resin composition includes, as a base of a thermosetting resin, for example, the copolyester of the present invention having a reactive group such as a hydroxyl group or a carboxyl group, and another resin, and further includes a curing agent, such as an isocyanate curing agent or a polyamine curing agent, that is capable of thermally reacting with the above-mentioned reactive group.

Examples of the curing agent according to the present embodiment include polyisocyanates having an aromatic structure in a molecular structure thereof, such as tolylene diisocyanate, diphenylmethane diisocyanate, polymeric diphenylmethane diisocyanate, 1,5-naphthalene diisocyanate, triphenylmethane triisocyanate, and xylylene diisocyanate, and compounds in which a part of an isocyanate group of the polyisocyanates is modified with carbodiimide; allophanate compounds derived from the above-mentioned polyisocyanates; polyisocyanates having an alicyclic structure in a molecular structure thereof, such as isophorone diisocyanate, 4,4'-methylenebis(cyclohexylisocyanate), and 1,3-(methyl isocyanato)cyclohexane; linear aliphatic polyisocyanates, such as 1,6-hexamethylene diisocyanate, lysine diisocyanate, and trimethylhexamethylene diisocyanate, and allophanate compounds thereof; isocyanurates of the above-mentioned polyisocyanates; allophanates derived from the above-mentioned polyisocyanates; birettes derived from the above-mentioned polyisocyanates; trimethylolpropane-modified adducts; polyfunctional isocyanates,such as polyisocyanates as reaction products of the above-mentioned various types of polyisocyanates and polyol components; polyethylene polyamines, such as ethylenediamine, diethylenetriamine, triethylenetetetramine, tetraethylenepentamine, pentaethylenehexamine, hexaethyleneheptamine, heptaethyleneoctamine, octaethylene nonamine, nonaethylene decamine, piperazine, and N-aminoalkylpiperazine having an alkyl chain having 2 to 6 carbon atoms; and amine compounds, such as 3-aminomethyl-3,5,5-trimethylcyclohexylamine (isophoronediamine or IPDA).

<Cured product of resin composition>

A cured product of the resin composition of the present embodiment is a cured product of a resin composition as the above-mentioned thermoplastic resin composition or a cured product of a resin composition as the above-mentioned thermosetting resin composition.

The polymer mentioned in the present specification can be used for a variety of applications. Specifically, the polymer can be used in a wide range of applications, including artificial leather, synthetic leather, shoes, thermoplastic

resin, resin foam, thermosetting resin, paints, laminate adhesives, elastic fiber, urethane raw materials, automotive parts, sporting goods, vibration isolators, damping materials, fiber treatment agents, and binders.

The copolyester can be used for a variety of applications. Specifically, the copolyester can be used in a wide range of applications, including artificial leather, synthetic leather, shoes, thermoplastic resin, resin foam, thermosetting resin, paints, laminating adhesives, elastic fiber, urethane raw materials, automotive parts, and sporting goods.

The polyurethane can be used for a variety of applications. Specifically, the polyurethane can be used in a wide range of applications, including artificial leather, synthetic leather, shoes, thermoplastic resin, resin foam, thermosetting resin, paints, laminating adhesives, vibration isolators, damping materials, automotive parts, sporting goods, fiber treatment agents, and binders.

(Coating agent)

A coating agent includes the copolyester resin according to the present invention, and further includes other components such as other resins, water, and an organic solvent, as necessary.

The coating agent can be applied onto a variety of substrates. An example of the application of the coating agent will be described below.

The coating agent is used, for example, for surface coating of a base material of a food packaging container. Examples of the base material include plastic films, such as a styrene resin film, a polyolefin resin film, a polyester resin film, and a nylon resin film, and laminates thereof. Examples of the base material include paper, a metallized film, and aluminum foil. The coating agent is preferably used for a biodegradable base material. Examples of the biodegradable base material include paper, a polyester film, a polyolefin film, and a starch film.

The coating agent can be used, for example, as an ink or an adhesive.

(Ink)

The ink includes the copolyester resin according to the present invention and a colorant, and further includes other components, such as a pigment dispersant, water, and an organic solvent, as necessary.

The ink is, for example, printing ink.

The ink may be, for example, water-based ink or ink containing no water (solvent-based ink).

(Adhesive)

The adhesive includes the copolyester resin of the present invention, and further includes other components, such as other resins, the curing agent, and an organic solvent, as necessary.

The adhesive can also be used as a laminating adhesive composition that is used for laminating the above-mentioned various base materials to produce a composite film to be mainly used for packaging materials for food, pharmaceuticals, detergents, and the like.

Examples of the adhesive that can be used include a two-part curable adhesive including the copolyester resin of the present invention, polymer polyol, and polyisocyanate, and a one-part adhesive including acrylic resin, urethane resin, and an ethylene-vinyl acetate copolymer. These adhesives can be used as solvent, non-solvent, water-based, or alcohol-based adhesives, as necessary.

(Sheet)

A sheet is produced using a resin composition including the copolyester resin according to the present invention. Besides the copolyester resin according to the present invention, the resin composition may include other resins and various additives. Examples of the various additives include a plasticizer, an antistatic agent, an antioxidant, an ultraviolet absorber, a lubricant, an antiblocking agent, and a heat stabilizer.

Examples of the sheet include an unstretched sheet, a biaxially stretched sheet, and a foamed sheet.

The application of the sheet is not particularly limited, and the sheet can be used for a wide range of applications, including food packaging containers, construction materials, household appliances, and miscellaneous goods, for example.

(Film)

A film is produced using a resin composition including the copolyester resin according to the present invention. Besides the copolyester resin according to the present invention, the resin composition may include other resins and various additives. Examples of the various additives include a plasticizer, an antistatic agent, an antioxidant, an ultraviolet

absorber, a lubricant, an antiblocking agent, and a heat stabilizer.

Examples of the film include an unstretched film, a biaxially stretched film, and a uniaxially stretched film. The film can be formed by melting pellets of a raw material of the film in an extruder and then forming the film by a T-die or blown extrusion method. In the case of the T-die method, a biaxially stretched film is obtained by longitudinal stretching using a speed difference between rolls and transverse stretching using a tenter.

(Laminate)

A laminate includes at least one selected from the sheet and the film of the present embodiment, and further includes other constitutionals such as a printing layer and a resin film, as necessary.

The laminate is obtained, for example, by laminating a film or a sheet on one or both sides of at least one selected from the sheet and the film of the present embodiment to enhance mechanical strength and chemical resistance, for example. Specifically, the laminate is obtained by heat-laminating a polystyrene-based blown extrusion film on at least one of the front and back sides of the sheet or the film, or by laminating an olefin-based film (CPP) with an adhesive.

The adhesive to be used is not limited to a particular one, and may be, for example, the adhesive of the present embodiment or any other known adhesive.

(Molded article)

A molded article is obtained by forming at least one of the sheet, the film, and the laminate of the present embodiment.

The molded article is obtained, for example, by thermoforming the sheet, the film, and the laminate of the present embodiment. Examples of a thermoforming method include hot plate contact heating forming, vacuum forming, vacuum pressure air forming, and plug-assist forming. In particular, indirect heat forming using an infrared heater as a heat source is preferably used.

[Examples]

Hereinafter, the present invention will be further detailed using examples, but the scope of the present invention is not limited to these examples.

<Evaluation of chemical structure>

In Examples and Comparative Examples, the chemical structure of a resin was identified by nuclear magnetic resonance ($^{13}$C-NMR) under the following conditions.

Measuring device: "JNM-ECM400S", manufactured by JEOL RESONANCE
Magnetic field strength: 100 MHz
Cumulative number of times: 1000 times
Solvent: deuterated chloroform
Paramagnetic relaxation reagent: chromium(III) acetylacetate
Sample concentration: 200 mg/1.0 mL

<Evaluation of average chain length>

<<Calculation of peak integral value>>

An obtained $^{13}$C-NMR spectrum was subjected to waveform separation processing using software JEOL Delta v5.3.1, and a triad peak integral value was calculated.

<<Calculation of average chain length of Quarterpolyester>>

The average chain length was calculated based on the following formula.

$$L_{x\text{-}y} = (I_{x\text{-}y\text{-}x} \times 2)/(I_{x\text{-}w\text{-}x} + I_{z\text{-}y\text{-}x} + I_{z\text{-}y\text{-}x} + I_{x\text{-}y\text{-}z} + I_{y\text{-}x\text{-}w}) + 1$$

L: average chain length
I: triad peak integral value
x: 2-methyl-1,3-propanediol-derived constitutional unit
y: adipic acid-derived constitutional unit
z: 1,4-butanediol-derived constitutional unit
w: succinic acid-derived constitutional unit

[Calculation of average chain length of copolyester including hydroxyalkanoic acid]

The average chain length was calculated based on the following formula.

$$L_{h\text{-}h} = 1 + 2 \times (I_{s\text{-}h\text{-}h} + I_{h\text{-}h\text{-}h})/(I_{s\text{-}h\text{-}b} + I_{h\text{-}h\text{-}b} + I_{b\text{-}s\text{-}h} + I_{h\text{-}s\text{-}h})$$

L: average chain length
I: triad peak integral value
h: 6-hexanoate-derived constitutional unit
s: 1,4-succinate-derived constitutional unit
b: 1,4-butanoate-derived constitutional unit

<Evaluation of molecular weight>

In Examples and Comparative Examples, the molecular weight of a resin was a value measured using gel permeation chromatography (GPC) under the following conditions.

Measuring device: Waters 600 Controller as a system controller

Waters Model Code 60F as a liquid-transfer pump
Waters 2414 as an RI (differential refractometer) detector
Waters 717plus Autosampler as an autosampler Data processing: Waters Empower3

Measurement conditions
Measurement conditions: column temperature of 40°C

chloroform ($CHCl_3$) as an eluent
flow rate of 1.0 ml/min

Standard: Polystyrene
Column: Shodex GPC LF-G, 1 column
Shodex GPC LF-804, 4 columns
Sample: a sample (100 μl) obtained by filtering 0.4% by mass of a chloroform solution in terms of resin solids through a microfilter

<Evaluation of oxidation>

In Examples and Comparative Examples, the acid value of a resin was calculated using the following procedure.

Approximately 1 g of a sample was weighed into an Erlenmeyer flask with a stopper, and 20 mL of acetone was added thereto so that the sample was dissolved in the acetone, and a phenolphthalein reagent as an indicator was added thereto, and the mixture was left standing for 30 seconds. Subsequently, the resultant solution was titrated with a 0.1 N alcoholic potassium hydroxide solution until the solution turned pink, and the acid value of the solution was determined by the following formula.

$$\text{Acid value (mg KOH/g)} = (5.611 \times a \times F)/S$$

S: sample volume (g)
a: amount of 0.1 N alcoholic potassium hydroxide solution consumed (mL)
F: factor of 0.1 N alcoholic potassium hydroxide solution

<Melting point measurement>

Measuring device: DSC822, manufactured by Mettler
Measurement conditions: under nitrogen flow, temperature rise and fall rate of 5°C/min, measurement temperature range of -60°C to 180°C

<Evaluation of biodegradability>

In Examples and Comparative Examples, biodegradability was calculated using the following procedure, and, from a value of the biodegradability, the biodegradability was evaluated.

<<Evaluation of degradability in seawater>>

Inoculum source: Seawater collected from the coastal area of Akane Bay (around Akanehama, Narashino City, Chiba Prefecture) was used as a collected inoculum source.

Biodegradability measurement method: Soda lime (a carbon dioxide absorbent) and a pressure sensor (OxiTop-IDS (registered trademark), manufactured by WTW) were attached to a test bottle, and biological oxygen demand (BOD) was measured under the following conditions to calculate biodegradability.

Incubation temperature: 27°C, at dark place
Incubation period: 28 days

Calculation of biodegradability:

The biodegradability of a sample as a resin of Examples or Comparative Examples was calculated based on the following formula.

$$\text{Biodegradability (\%)} = (\text{BOD0}-\text{BODB})/\text{ThOD}\times 100$$

BOD0: Biochemical oxygen demand of sample (measured value: mg)
BODB: Average biochemical oxygen demand in blank test (measurement value: mg)
ThOD: Theoretical oxygen demand necessary for complete oxidation of sample (calculated value: mg)

Evaluation criteria:

A (Excellent): biodegradability of 50% or higher
B (Very good): biodegradability of 40% or higher and lower than 50%
C (Good): biodegradability of 24% or higher and lower than 40%
D (Fair): biodegradability of 15% or higher and lower than 24% (lower limit for practical use)
E (Unacceptable): biodegradability of lower than 15% (not suitable for practical use)

<<Evaluation of degradability in fresh water>>

Degradability was evaluated by the same operation as in the method described in the section "Evaluation of degradability in seawater", except that the inoculum source was river water collected from the Ina River (around Momozono, Ikeda City, Hyogo Prefecture).

<<Evaluation of soil degradability>>

Degradability was evaluated by the same operation as in the method described in the section "Evaluation of degradability in seawater", except that the inoculum source was soil collected from the Oshinozuka Community Farm (around Oshinozuka, Sakura City, Chiba Prefecture).

<<Evaluation of compost degradability>>

A compost degradation rate was measured by a method according to JIS K6953-1:2011.

Incubation temperature: 58°C
Incubation period: 28 days

Evaluation criteria:

A (Excellent): compost degradation rate of 50% or higher
B (Very Good): compost degradation rate of 40% or higher and lower than 50%
C (Good): compost degradation rate of 24% or higher and lower than 40%
D (Fair): compost degradation rate of 15% or higher and lower than 24% (lower limit for practical use)
E (Unacceptable): compost degradation rate of lower than 15% (not suitable for practical use)

(Synthesis Example 1)

<Synthesis of poly(2-methyl-1,3-propanediol/adipic acid) (P(2MPD/AA))>

A polyester reaction vessel equipped with a stirrer, a nitrogen gas inlet tube, a rectifying tube, a moisture separator, and the like was charged with 396 parts by mass of 2-methyl-1,3-propanediol (2MPD), 604 parts by mass of adipic acid (AA), and 0.1 parts by mass of titanium tetraisopropoxide (TIPT), and an esterification reaction was allowed to proceed under nitrogen flow at a liquid temperature of a reaction liquid of 200°C and a vapor temperature of 98°C. The reaction was terminated at the time when the acid value of the reaction liquid reached 2 mg KOH/g or less, whereby P(2MPD/AA) was obtained. The structure of P(2MPD/AA) is expressed by a formula (9).

[Chemical Formula 19]

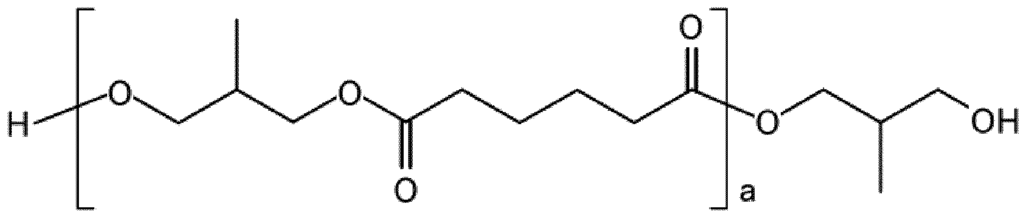

Formula (9)

(In the formula (9), a represents a positive integer.)

The results of a biodegradability evaluation were that biodegradability in the seawater was 63%, biodegradability in the fresh water was 65%, biodegradability in the soil was 78%, and the compost degradation rate was 83%. The results of the average molecular weight measurement were that the number average molecular weight Mn was 10071 and the weight average molecular weight Mw was 31524.

(Synthesis Example 2)

<Synthesis of poly(1,4-butanediol/succinic acid) (P(BG/SA))>

P(BG/SA) was obtained in the same manner as in Synthesis Example 1, except that 441 parts by mass of 1,4-butanediol (BG), 559 parts by mass of succinic acid (SA), and 0.2 parts by mass of titanium tetraisopropoxide (TIPT) were used as raw materials and the liquid temperature of the reaction liquid was 220°C. The structure of P(BG/SA) is expressed by a formula (10).

[Chemical Formula 20]

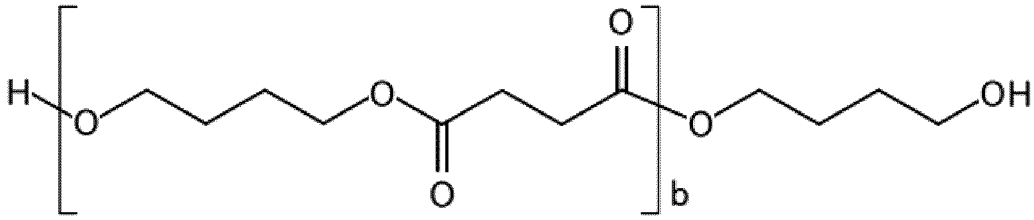

Formula (10)

(In the formula (10), b represents a positive integer.)

The results of a biodegradability evaluation were that biodegradability in the seawater was 3%, biodegradability in the fresh water was 3%, biodegradability in the soil was 10%, and the compost degradation rate was 13%. The results of the average molecular weight measurement were that the number average molecular weight Mn was 12254 and the weight average molecular weight Mw was 28416.

(Synthesis Example 3)

<Synthesis of poly(2-methyl-1,3-propanediol/sebacic acid) (P(2MPD/SebA))>

P(2MPD/SebA) was obtained in the same manner as in Synthesis Example 1, except that 322 parts by mass of 2-methyl-1,3-propanediol (2MPD), 678 parts by mass of sebacic acid (SebA) and 0.2 parts by mass of titanium tetraisopropoxide (TIPT) were used as raw materials. The structure of P(2MPD/SebA) is expressed by a formula (11).

[Chemical Formula 21]

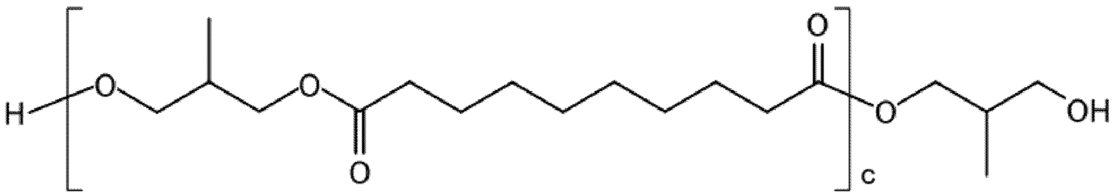

Formula (11)

(In the formula (11), c represents a positive integer.)

The results of a biodegradability evaluation were that biodegradability in the seawater was 65%, biodegradability in the fresh water was 65%, biodegradability in the soil was 74%, and the compost degradation rate was 83%. The results of the average molecular weight measurement were that the number average molecular weight Mn was 19587 and the weight average molecular weight Mw was 63356.

(Synthesis Example 4)

<Synthesis of poly(3-methyl-1,5-propanediol/adipic acid) (P(3MPD/AA))>

P(3MPD/AA) was obtained in the same manner as in Synthesis Example 1, except that 458 parts by mass of 3-methyl-1,5-propanediol (3MPD), 542 parts by mass of adipic acid (AA), and 0.2 parts by mass of titanium tetraisopropoxide (TIPT) were used as raw materials. The structure of P(3MPD/AA) is expressed by a formula (12).

[Chemical Formula 22]

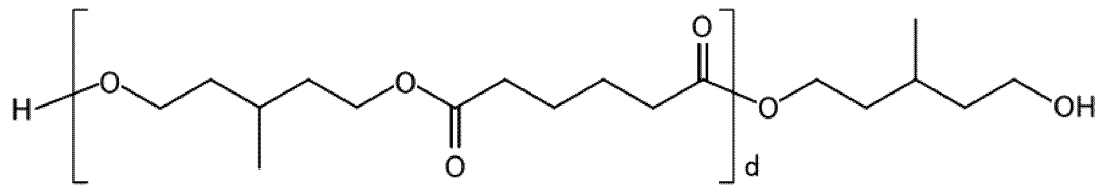

Formula (12)

(In the formula (12), d represents a positive integer.)

The results of a biodegradability evaluation were that biodegradability in the seawater was 63%, biodegradability in the fresh water was 64%, biodegradability in the soil was 78%, and the compost degradation rate was 85%. The results of average molecular weight measurement were that the number average molecular weight Mn was 13880 and the weight average molecular weight Mw was 42954.

(Synthesis Example 5)

<Synthesis of poly(1,4-butanediol/adipic acid/terephthalic acid) (P(BG/AA/tPA))>

P(BG/AA/tPA) was obtained in the same manner as in Synthesis Example 1, except that 398 parts by mass of 1,4-butanediol (BG), 292 parts by mass of adipic acid (AA), 332 parts by mass of terephthalic acid (tPA), and 0.2 parts by mass of titanium tetraisopropoxide (TIPT) were used as raw materials and the liquid temperature of the reaction liquid was 220°C. The structure of P(BG/AA/tPA) is expressed by a formula (13).

[Chemical Formula 23]

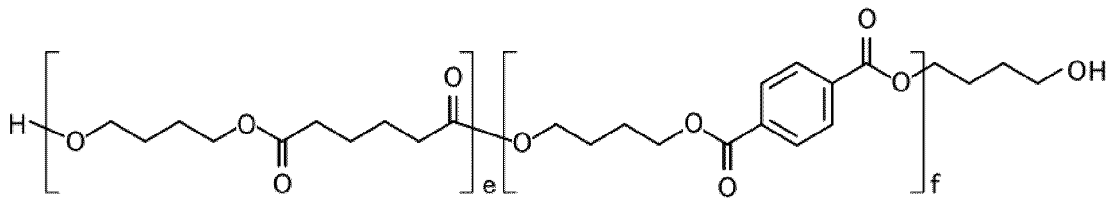

Formula (13)

(In the formula (13), e and f each independently represent a positive integer.)

The results of a biodegradability evaluation were that biodegradability in the seawater was 3%, biodegradability in the fresh water was 3%, biodegradability in the soil was 8%, and the compost degradation rate was 10%. The results of average molecular weight measurement were that the number average molecular weight Mn was 26445 and the weight average molecular weight Mw was 81430.

(Synthesis Example 6)

<Synthesis of poly(ethylene glycol/adipic acid) (P(EG/AA))>

A polyester reaction vessel equipped with a stirrer, a nitrogen gas inlet tube, a rectifying tube, a moisture separator, and the like was charged with 306 parts by mass of ethylene glycol (EG), 694 parts by mass of adipic acid (AA), and 0.1 parts by mass of titanium tetraisopropoxide (TIPT), and an esterification reaction was allowed to proceed under nitrogen flow at a liquid temperature of a reaction liquid of 190°C and a vapor temperature of 98°C. The reaction was terminated at the time when the acid value of the reaction liquid reached 2 mg KOH/g or less, whereby P(EG/AA) was obtained. The structure of P(EG/AA) is expressed by a formula (14).

[Chemical Formula 24]

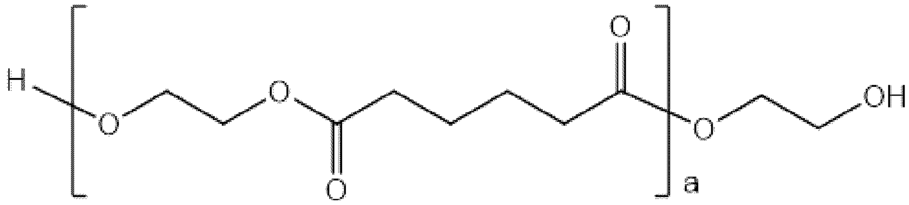

Formula (14)

(In the formula (14), a represents a positive integer.)

The results of a biodegradability evaluation were that biodegradability in the seawater was 50%, biodegradability in the fresh water was 52%, biodegradability in the soil was 55%, and the compost degradation rate was 65%. The results of average molecular weight measurement were that the number average molecular weight Mn was 5568 and the weight average molecular weight Mw was 14619.

(Synthesis Example 7)

<Synthesis of poly(diethylene ethylene glycol/adipic acid) (P(DEG/AA))>

A polyester reaction vessel equipped with a stirrer, a nitrogen gas inlet tube, a rectifying tube, a moisture separator, and the like was charged with 431 parts by mass of diethylene ethylene glycol (DEG), 569 parts by mass of adipic acid (AA), and 0.1 parts by mass of titanium tetraisopropoxide (TIPT), and an esterification reaction was allowed to proceed under nitrogen flow at a liquid temperature of a reaction liquid of 200°C and a vapor temperature of 98°C. The reaction was terminated at the time when the acid value of the reaction liquid reached 2 mg KOH/g or less, whereby P(DEG/AA) was obtained. The structure of P(DEG/AA) is expressed by a formula (15).

[Chemical Formula 25]

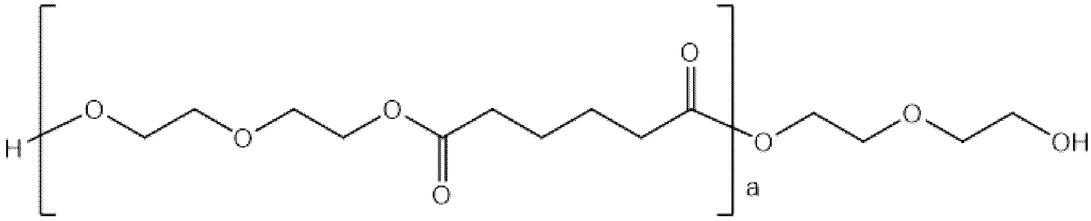

Formula (15)

(In the formula (15), a represents a positive integer.)

The results of a biodegradability evaluation were that the biodegradation rate in the seawater was 63%, the biodegradation rate in the fresh water was 65%, the biodegradation rate in the soil was 70%, and the compost degradation rate was 78%. The results of average molecular weight measurement were that the number average molecular weight Mn was 14200 and the weight average molecular weight Mw was 102600.

(Synthesis Example 8)

<Synthesis of poly(1,2-propanediol/adipic acid) (P(1,2PG/AA))>

A polyester reaction vessel equipped with a stirrer, a nitrogen gas inlet tube, a rectifying tube, a moisture separator, and the like was charged with 351 parts by mass of 1,2-propanediol (1,2PG), 649 parts by mass of adipic acid (AA), and 0.1 parts by mass of titanium tetraisopropoxide (TIPT), and an esterification reaction was allowed to proceed under nitrogen flow at a liquid temperature of a reaction liquid of 200°C and a vapor temperature of 98°C. The reaction was terminated at the time when the acid value of the reaction liquid reached 2 mg KOH/g or less, whereby P(1,2PG/AA) was obtained. The structure of P(1,2PG/AA) is expressed by a formula (16).

[Chemical Formula 26]

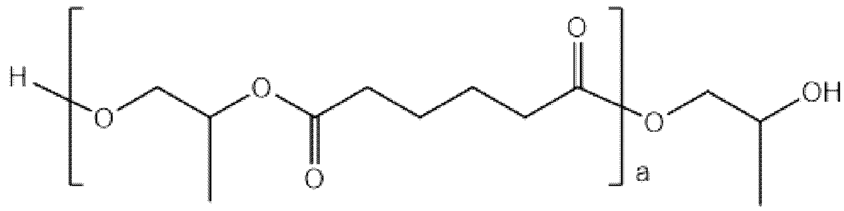

Formula (16)

(In the formula (16), a represents a positive integer.)

The results of a biodegradability evaluation were that biodegradability in the seawater was 71%, biodegradability in the fresh water was 67%, biodegradability in the soil was 75%, and the compost degradation rate was 81%. The results of average molecular weight measurement were that the number average molecular weight Mn was 6870 and the weight average molecular weight Mw was 14070.

(Synthesis Example 9)

<Synthesis of poly(1,3-butanediol/adipic acid) (P(1,3BG/AA))>

A polyester reaction vessel equipped with a stirrer, a nitrogen gas inlet tube, a rectifying tube, a moisture separator, and the like was charged with 391 parts by mass of 1,3-butanediol (1,3BG), 609 parts by mass of adipic acid (AA), and 0.1 parts by mass of titanium tetraisopropoxide (TIPT), and an esterification reaction was allowed to proceed under nitrogen flow at a liquid temperature of a reaction liquid of 190°C and a vapor temperature of 98°C. The reaction was terminated at the time when the acid value of the reaction liquid reached 2 mg KOH/g or less, whereby P(1,3BG/AA) was obtained. The structure of P(1,3BG/AA) is expressed by a formula (17).

[Chemical Formula 27]

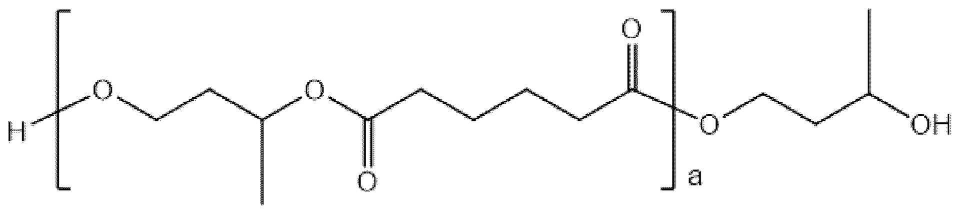

Formula (17)

(In the formula (17), a represents a positive integer.)

The results of a biodegradability evaluation were that biodegradability in the seawater was 60%, biodegradability in the fresh water was 59%, biodegradability in the soil was 63%, and the compost degradation rate was 78%. The results of average molecular weight measurement were that the number average molecular weight Mn was 14700 and the weight average molecular weight Mw was 92000.

(Synthesis Example 10)

<Synthesis of poly(1,3-propanediol/adipic acid) (P(1,3PG/AA))>

A polyester reaction vessel equipped with a stirrer, a nitrogen gas inlet tube, a rectifying tube, a moisture separator, and the like was charged with 351 parts by mass of 1,3-propanediol (1,3PG), 649 parts by mass of adipic acid (AA), and 0.1 parts by mass of titanium tetraisopropoxide (TIPT), and an esterification reaction was allowed to proceed under nitrogen flow at a liquid temperature of a reaction liquid of 200°C and a vapor temperature of 98°C. The reaction was terminated at the time when the acid value of the reaction liquid reached 2 mg KOH/g or less, whereby P(1,3PG/AA) was obtained. The structure of P(1,3PG/AA) is expressed by a formula (18).

[Chemical Formula 28]

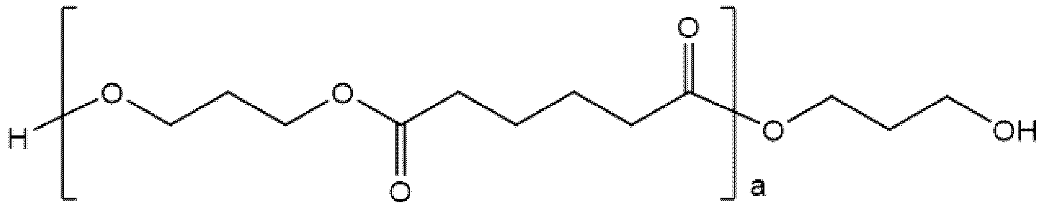

Formula (18)

(In the formula (18), a represents a positive integer.)

The results of a biodegradability evaluation were that the biodegradation rate in the seawater was 47%, the biodegradation rate in the fresh water was 49%, the biodegradation rate in the soil was 55%, and the compost degradation rate was 68%. The results of average molecular weight measurement were that the number average molecular weight Mn was 5540 and the weight average molecular weight Mw was 24500.

(Synthesis Example 11)

<Synthesis of poly(1,4-butanediol/adipic acid) (P(1,4BG/AA))>

A polyester reaction vessel equipped with a stirrer, a nitrogen gas inlet tube, a rectifying tube, a moisture separator, and the like was charged with 391 parts by mass of 1,4-butanediol (1,4BG), 609 parts by mass of adipic acid (AA), and 0.1 parts by mass of titanium tetraisopropoxide (TIPT), and an esterification reaction was allowed to proceed under nitrogen flow at a liquid temperature of a reaction liquid of 220°C and a vapor temperature of 98°C. The reaction was terminated at the time when the acid value of the reaction liquid reached 2 mg KOH/g or less, whereby P(1,4BG/AA) was obtained. The structure of P(1,4BG/AA) is expressed by a formula (19).

[Chemical Formula 29]

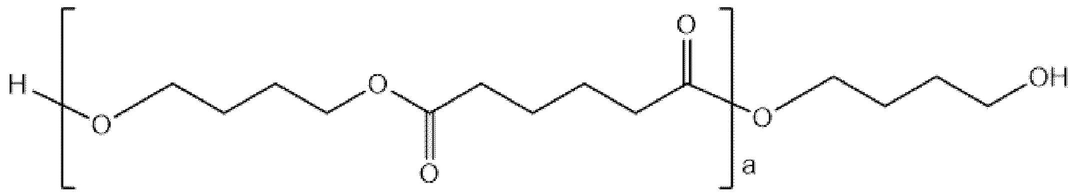

Formula (19)

(In the formula (19), a represents a positive integer.)

The results of a biodegradability evaluation were that biodegradability in the seawater was 61%, biodegradability in the fresh water was 62%, biodegradability in the soil was 68%, and the compost degradation rate was 78%. The results of average molecular weight measurement were that the number average molecular weight Mn was 27200 and the weight average molecular weight Mw was 132000.

(Synthesis Example 12)

<Synthesis of poly(1,5-pentanediol/adipic acid) (P(1,5PG/AA))>

A polyester reaction vessel equipped with a stirrer, a nitrogen gas inlet tube, a rectifying tube, a moisture separator, and the like was charged with 426 parts by mass of 1,5-pentanediol (1,5PG), 574 parts by mass of adipic acid (AA), and 0.1 parts by mass of titanium tetraisopropoxide (TIPT), and an esterification reaction was allowed to proceed under nitrogen flow at a liquid temperature of a reaction liquid of 220°C and a vapor temperature of 98°C. The reaction was terminated at the time when the acid value of the reaction liquid reached 2 mg KOH/g or less, whereby P(1,5PG/AA) was obtained. The structure of P(1,5PG/AA) is expressed by a formula (20).

[Chemical Formula 30]

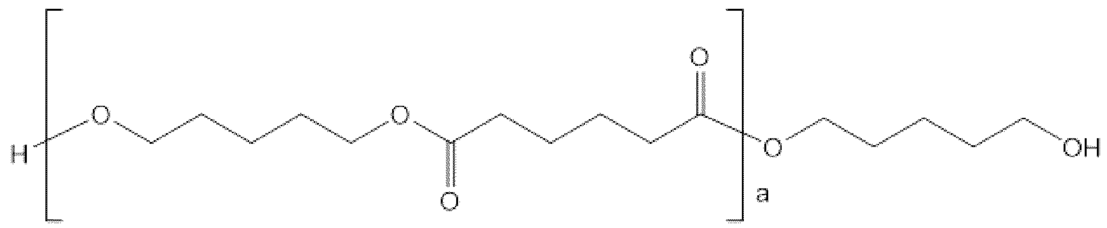

Formula (20)

(In the formula (20), a represents a positive integer.)

The results of a biodegradability evaluation were that biodegradability in the seawater was 63%, biodegradability in the fresh water was 65%, biodegradability in the soil was 67%, and the compost degradation rate was 76%. The results of average molecular weight measurement were that the number average molecular weight Mn was 6210 and the weight average molecular weight Mw was 26900.

(Synthesis Example 13)

<Synthesis of poly(1,6-hexanediol/adipic acid) (P(1,6HD/AA))>

A polyester reaction vessel equipped with a stirrer, a nitrogen gas inlet tube, a rectifying tube, a moisture separator, and the like was charged with 458 parts by mass of 1,6-hexanediol (1,6HD), 542 parts by mass of adipic acid (AA), and 0.1 parts by mass of titanium tetraisopropoxide (TIPT), and an esterification reaction was allowed to proceed under nitrogen flow at a liquid temperature of a reaction liquid of 220°C and a vapor temperature of 98°C. The reaction was terminated at the time when the acid value of the reaction liquid reached 2 mg KOH/g or less, whereby P(1,6HD/AA) was obtained. The structure of P(1,6HD/AA) is expressed by a formula (21).

[Chemical Formula 31]

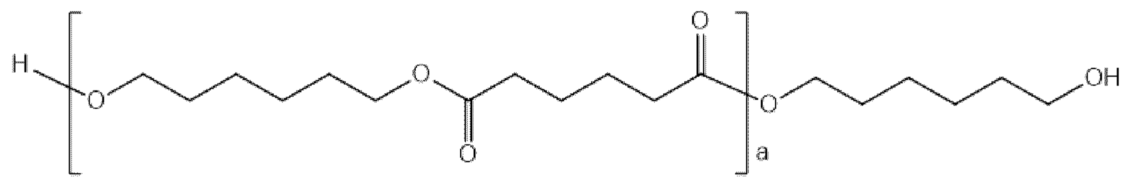

Formula (21)

(In the formula (21), a represents a positive integer.)

The results of a biodegradability evaluation were that biodegradability in the seawater was 55%, biodegradability in the fresh water was 54%, biodegradability in the soil was 62%, and the compost degradation rate was 68%. The results of average molecular weight measurement were that the number average molecular weight Mn was 9634 and the weight average molecular weight Mw was 30394.

(Synthesis Example 14)

<Synthesis of poly(1,9-nonanediol/adipic acid) (P(1,9ND/AA))>

A polyester reaction vessel equipped with a stirrer, a nitrogen gas inlet tube, a rectifying tube, a moisture separator, and the like was charged with 535 parts by mass of 1,9-nonanediol (1,9ND), 465 parts by mass of adipic acid (AA), and 0.1 parts by mass of titanium tetraisopropoxide (TIPT), and an esterification reaction was allowed to proceed under nitrogen flow at a liquid temperature of a reaction liquid of 220°C and a vapor temperature of 98°C. The reaction was terminated at the time when the acid value of the reaction liquid reached 2 mg KOH/g or less, whereby P(1,9ND/AA) was obtained. The structure of P(1,9ND/AA) is expressed by a formula (22).

[Chemical Formula 32]

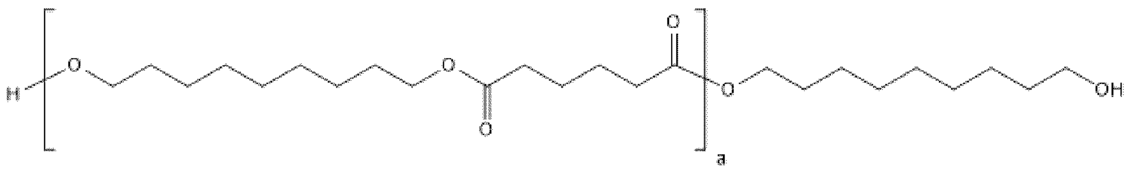

Formula (22)

(In the formula (22), a represents a positive integer.)

The results of a biodegradability evaluation were that biodegradability in the seawater was 58%, biodegradability in the fresh water was 57%, biodegradability in the soil was 65%, and the compost degradation rate was 75%. The results of average molecular weight measurement were that the number average molecular weight Mn was 4410 and the weight average molecular weight Mw was 28900.

(Example 1)

A glass vessel equipped with a stirrer and a nitrogen gas inlet tube was charged with 57 parts by mass of P(2MPD/AA) obtained in Synthesis Example 1, 443 parts by mass of P(BG/SA) obtained in Synthesis Example 2, and 0.05 parts by mass of titanium tetraisopropoxide (TIPT). The resultant mixture was kept under nitrogen flow at a vessel temperature of 200°C for 3 hours, whereby a copolyester resin including 2MPD/AA and BG/SA as constitutional units. The structure of the obtained copolyester resin is expressed by a formula (A-1).

[Chemical Formula 33]

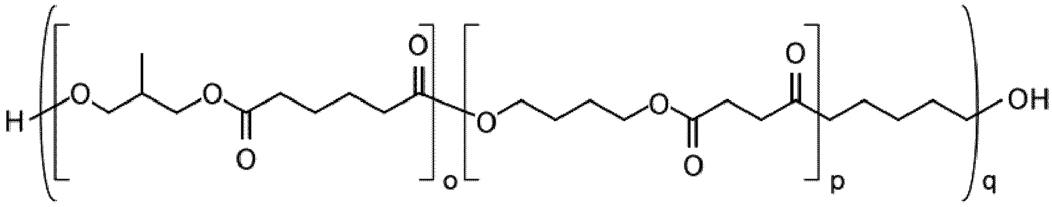

Formula (A-1)

(In the formula (A-1), o, p, and q each independently represent a positive integer.)

The result of an average chain length evaluation was that 2MPD/AA had an average chain length of 6.9.

The results of a biodegradability evaluation were that the degradability in the seawater was 16% and the compost degradation rate was 62%.

The results of the biodegradability evaluation are illustrated in the following Table 1 (Table 1A and Table 1B). Hereinafter, Table 1A and Table 1B are sometimes collectively referred to as Table 1.

(Examples 2 to 6)

A copolyester resin was obtained in the same manner as in Example 1, except that the amounts of P(2MPD/AA) and P(BG/SA) blended and the keeping time as a reaction time were changed to values illustrated in Table 1.

(Example 7)

A copolyester resin was obtained in the same manner as in Example 1, except that 305 parts by mass of P(BG/SA) obtained in Synthesis Example 2, 195 parts by mass of P(2MPD/SebA) obtained in Synthesis Example 3, and 0.05 parts by mass of titanium tetraisopropoxide (TIPT) were fed as raw materials and the keeping time as a reaction time was changed to a value illustrated in Table 1. The structure of the obtained copolyester resin is expressed by a formula (A-2).

[Chemical Formula 34]

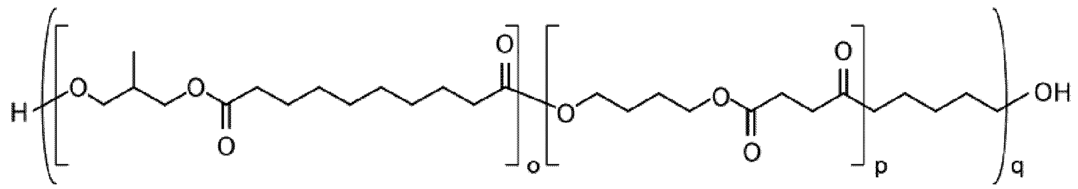

Formula (A-2)

(In the formula (A-2), o, p, and q each independently represent a positive integer.)

(Example 8)

A copolyester resin was obtained in the same manner as in Example 1, except that 319 parts by mass of P(BG/SA) obtained in Synthesis Example 2, 181 parts by mass of P(3MPD/AA) obtained in Synthesis Example 4, and 0.05 parts by mass of titanium tetraisopropoxide (TIPT) were fed as raw materials and the keeping time as a reaction time was changed to a value illustrated in Table 1. The structure of the obtained copolyester resin is expressed by a formula (A-3).

[Chemical Formula 35]

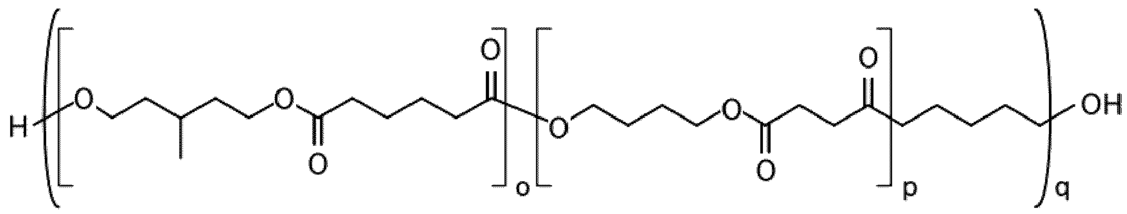

Formula (A-3)

(In the formula (A-3), o, p, and q each independently represent a positive integer.)

(Example 9)

A copolyester resin was obtained in the same manner as in Example 1, except that 104 parts by mass of P(2MPD/AA) obtained in Synthesis Example 1, 390 parts by mass of P(BG/AA/tPA) obtained in Synthesis Example 5, and 0.05 parts by mass of titanium tetraisopropoxide (TIPT) were fed as raw materials and the keeping time as a reaction time was changed to a value illustrated in Table 1. The structure of the obtained copolyester resin is expressed by a formula (A-4).

[Chemical Formula 36]

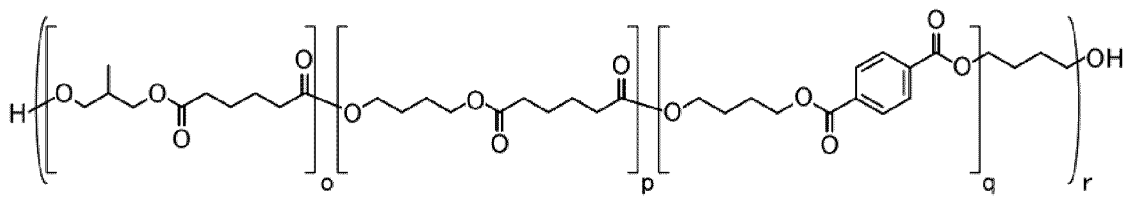

Formula (A-4)

(In the formula (A-4), o, p, q, and r each independently represent a positive integer.)

(Example 10)

Into a four-neck flask equipped with a thermometer, a stirrer, a nitrogen gas inlet, and a reflux condenser, 500 parts by mass of P(2MPD/AA/BG/SA) obtained in Example 5 was fed and dissolved in 300 parts by parts of ethyl acetate to obtain an ethyl acetate solution of polyester polyol. To the obtained ethyl acetate solution, 0.1 parts by mass of dibutyl tin dilaurate (DBTDL) and 13 parts by mass of isophorone diisocyanate (IPDI) were added and the resultant mixture was subjected to a reaction under nitrogen flow at 70°C to 80°C. The reaction was terminated at the time when the weight percentage of isocyanate reached less than 0.05% by mass, whereby a polyester urethane polyol solution was obtained.

(Example 11)

A polyester urethane polyol solution was obtained in the same manner as in Example 10, except that 10 parts by mass of hexamethylene diisocyanate (HDI) was used as a raw material.

(Example 12)

A polyester urethane polyol solution was obtained in the same manner as in Example 10, except that 15 parts by mass of diphenylmethane diisocyanate (MDI) was used as a raw material.

(Comparison Example 1)

P(BG/SA) obtained in Synthesis Example 2 was used.

Reaction conditions and evaluation results of Examples 1 to 9 and Comparative Example 1 are summarized in Table 1. Reaction conditions and evaluation results of Examples 10 to 12 are summarized in Table 2.

[Table 1A]

| | Raw Material | | | | | | Reaction time [h] |
|---|---|---|---|---|---|---|---|
| | Biodegradable block (X) | | | Non-biodegradable block (Y) | | Molar ratio of biodegradable block (X) [%] | |
| | P(2MPD/AA) [part by mass] | P(2MPD/SebA) [part by mass] | P (3MPD/AA) [part by mass] | P(BG/SA) [part by mass] | P (BG/AA/tPA) [part by mass] | | |
| Example 1 | 57 | - | - | 443 | - | 10 | 3 |
| Example 2 | 113 | - | - | 387 | - | 20 | 1.5 |
| Example 3 | 113 | - | - | 387 | - | 20 | 8 |
| Example 4 | 166 | - | - | 334 | - | 30 | 1.5 |
| Example 5 | 166 | - | - | 334 | - | 30 | 5 |
| Example 6 | 231 | - | - | 269 | - | 50 | 1.5 |
| Example 7 | - | 195 | - | 305 | - | 30 | 8 |
| Example 8 | - | - | 181 | 319 | - | 30 | 8 |
| Example 9 | 104 | - | - | - | 396 | 30 | 24 |
| Comparative Example 1 | - | - | - | 1000 | - | - | - |

[Table 1B]

| | Copolyester resin | | | | | | | | | | |
|---|---|---|---|---|---|---|---|---|---|---|---|
| | Molecula r weight (Mn) | Molecula r weight (Mw) | Average chain length of biodegradable block (X) | | | Randomn ess | Degradabili ty in seawater | Degradabi lity in fresh water | Degradab ility in soil | Degradabi lity in compost | Melting point [°C] |
| | | | P(2MPD /AA) | P(2MPD /SebA) | P (3MPD /AA) | | | | | | |
| Example 1 | 6573 | 19148 | 6.9 | - | - | 0.15 | D | D | B | A | 112 |
| Example 2 | 8168 | 24241 | 9. 4 | - | - | 0.13 | C | C | B | A | 112 |
| Example 3 | 6599 | 19537 | 4.0 | - | - | 0.27 | B | B | B | A | 109 |
| Example 4 | 9445 | 26126 | 15.1 | - | - | 0.09 | C | C | B | A | 111 |
| Example 5 | 8505 | 22648 | 5.7 | - | - | 0.23 | A | A | A | A | 109 |
| Example 6 | 22344 | 40391 | 11.9 | - | - | 0.15 | A | A | A | A | 102 |
| Example 7 | 7632 | 33071 | - | 5.6 | - | 0.25 | C | C | B | A | 105 |
| Example 8 | 6908 | 28800 | - | - | 5.2 | 0.28 | D | D | B | A | 103 |
| Example 9 | 17704 | 47564 | 4.2 | - | - | 0.89 | D | D | B | A | 110 |
| Compara tive Example 1 | 12254 | 28416 | - | - | - | - | E | E | E | D | 114 |

[Table 2]

| | Raw material | | | | Resin | | | | | | |
|---|---|---|---|---|---|---|---|---|---|---|---|
| | Copolyester | Diisocyanate | | | | | | | | | |
| | Example 5 [part by mass] | IPDI [part by mass] | HDI [part by mass] | MDI [part by mass] | Molecular weight (Mn) | Molecular weight (Mw) | Degradability in seawater | Degradability in fresh water | Degradability in soil | Degradability in compost | Melting point [°C] |
| Example 10 | 500 | 13 | - | - | 12750 | 40391 | B | B | B | A | 123 |
| Example 11 | 500 | - | 10 | - | 13500 | 43300 | B | B | B | A | 135 |
| Example 12 | 500 | - | - | 15 | 12800 | 41200 | B | B | B | A | 140 |

From the above-described Examples, it was confirmed that the copolyester resin according to the present invention was excellent in thermoformability and biodegradability, particularly excellent in biodegradability.

(Synthesis Example 15)

<Synthesis of poly(caprolactone) (PCL)>

A reaction vessel equipped with a stirrer, a nitrogen gas inlet tube, a rectifying tube, a moisture separator, and the like was charged with 487 parts by mass of ε-caprolactone (εCL) and 5 parts by mass of methanesulfonic acid, and a ring-opening polymerization reaction was allowed to proceed under a nitrogen gas flow at a liquid temperature of a reaction liquid of 100°C for 5 hours, whereby poly(caprolactone) (PCL) was obtained. The structure of PCL is expressed by a formula (23).

[Chemical Formula 37]

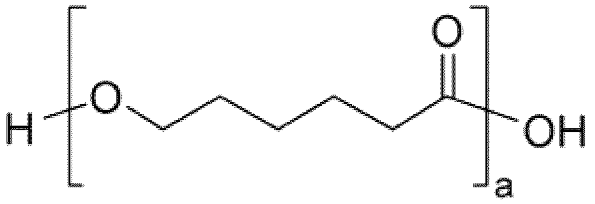

Formula (23)

(In the formula (23), a represents a positive integer.)

Average molecular weights were measured using the above-described average molecular weight measurement method. The number average molecular weight Mn was 14,630 and the weight average molecular weight Mw was 23,882.

Using the above-described $^1$H-NMR measurement method, a $^1$H-NMR spectrum was measured. The result is as follows.

$^1$H-NMR δ (CDCl3): 1.30-1.38(m,2H), 1.57-1.64(m,4H), 2.26(t,2H), 4.01(t,2H)

The results of a biodegradability evaluation were that biodegradability in the seawater was 78%, biodegradability in the fresh water was 77%, biodegradability in the soil was 79%, and the compost degradation rate was 83%.

<Capa6400 (PCL product, manufactured by Ingevity)>

The results of an average molecular weight evaluation were that the number average molecular weight Mn was 24400 and the weight average molecular weight Mw was 87757. The results of a biodegradability evaluation were that biodegradability in the seawater was 76%, biodegradability in the fresh water was 77%, biodegradability in the soil was 78%, and the compost degradation rate was 81%.

<BioPBS (P(BG/SA) product, manufactured by Mitsubishi Chemical Corporation)>

The results of an average molecular weight evaluation were that the number average molecular weight Mn was 59499 and the weight average molecular weight Mw was 171333. The results of a biodegradability evaluation were that biodegradability in the seawater was 2%, biodegradability in the fresh water was 1%, biodegradability in the soil was 6%, and the compost degradation rate was 12%.

<Ecoflex (P(BG/AA/tPA)) product, manufactured by BASF)>

The results of an average molecular weight evaluation were that the number average molecular weight Mn was 26445 and the weight average molecular weight Mw was 81430. The results of a biodegradability evaluation were that biodegradability in the seawater was 1%, biodegradability in the fresh water was 1%, biodegradability in the soil was 6%, and the compost degradation rate was 10%.

(Example 13)

A glass vessel equipped with a stirrer and a nitrogen gas inlet tube was charged with 5.4 parts by mass of

Capa6400 (PCL product, manufactured by Ingevity), 400 parts by mass of BioPBS (P(BG/SA) product, manufactured by Mitsubishi Chemical Corporation), and 0.08 parts by mass of titanium tetraisopropoxide (TIPT). The resultant mixture was kept under reduced pressure at a vessel temperature of 200°C for 6 hours, whereby a copolyester including PCL and BG/SA as constitutional units was obtained. The structure of the obtained copolyester is expressed by a formula (B-1).

[Chemical Formula 38]

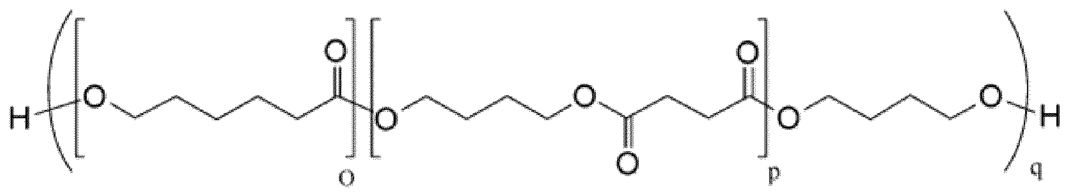

Formula (B-1)

(In the formula (B-1), o, p, and q each independently represent a positive integer.)

Using the above-described method, the average chain length of a 6-hydroxyhexanoic acid (6HH)-derived constitutional unit (6HH-U) constituting PCL was calculated as the average chain length of the biodegradable block (X). The biodegradability was also evaluated and the average molecular weights were measured.

These results are illustrated in the following Table 3 (Table 3A and Table 3B). Hereinafter, Table 3A and Table 3B are sometimes collectively referred to as Table 3.

(Example 14)

A glass vessel equipped with a stirrer and a nitrogen gas inlet tube was charged with 11 parts by mass of PCL obtained in Synthesis Example 15, 400 parts by mass of P(BG/SA) obtained in Synthesis Examples 2, and 0.08 parts by mass of titanium tetraisopropoxide (TIPT). The resultant mixture was kept under nitrogen gas flow at a vessel temperature of 200°C for 3 hours, whereby a copolyester including PCL and BG/SA as constitutional units was obtained. The structure of the obtained copolyester is expressed by a formula (B-2).

[Chemical Formula 39]

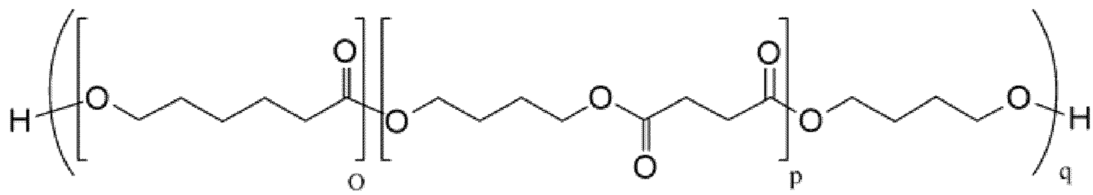

Formula (B-2)

(In the formula (B-2), o, p, and q each independently represent a positive integer.)

Using the same methods as in Example 13, an average chain length was calculated, biodegradability was evaluated, and average molecular weights were measured.

The results are illustrated in Table 3.

(Examples 15, 17, 18, 20 to 22)

A copolyester was obtained in the same manner as in Example 14, except that the amounts of PCL and P(BG/SA) blended and the keeping time as a reaction time were changed to values illustrated in Table 3.

The same evaluations as in Example 13 were performed. The results are illustrated in Table 3.

(Examples 16, 19, and 23)

A copolyester was obtained in the same manner as in Example 13, except that the amounts of PCL and P(BG/SA)

blended and the keeping time as a reaction time were changed to values illustrated in Table 3.

The same evaluations as in Example 13 were performed. The results are illustrated in Table 3.

(Example 24)

A glass vessel equipped with a stirrer and a nitrogen gas inlet tube was charged with 197 parts by mass of Capa6400 (PCL product, manufactured by Ingevity), 300 parts by mass of BioPBS (P(BG/SA) product, manufactured by Mitsubishi Chemical Corporation), and 0.09 parts by mass of titanium tetraisopropoxide (TIPT). The resultant mixture was kept under nitrogen flow at a vessel temperature of 200°C for 5 hours, whereby a copolyester including PCL and BG/SA as constitutional units was obtained. The structure of the obtained copolyester is expressed by a formula (B-3).

[Chemical Formula 40]

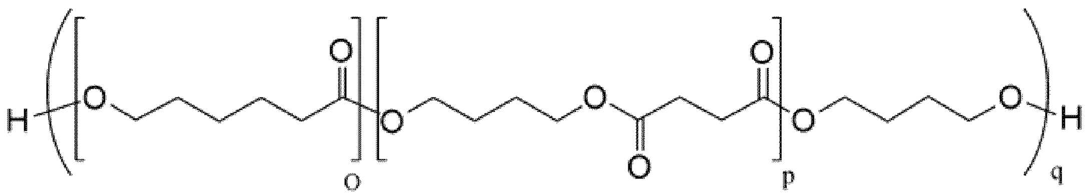

Formula (B-3)

(In the formula (B-3), o, p, and q each independently represent a positive integer.)

The same evaluations as in Example 13 were performed. The results are illustrated in Table 3.

(Example 25)

A copolyester was obtained in the same manner as in Example 13, except that 52 parts by mass of Capa6400 (PCL product, manufactured by Ingevity), 351 parts by mass of Ecoflex (P(BG/AA/tPA) product, manufactured by BASF), and 0.08 parts by mass of titanium tetraisopropoxide (TIPT) were used as raw materials. The structure of the obtained copolyester is expressed by a formula (B-4).

[Chemical Formula 41]

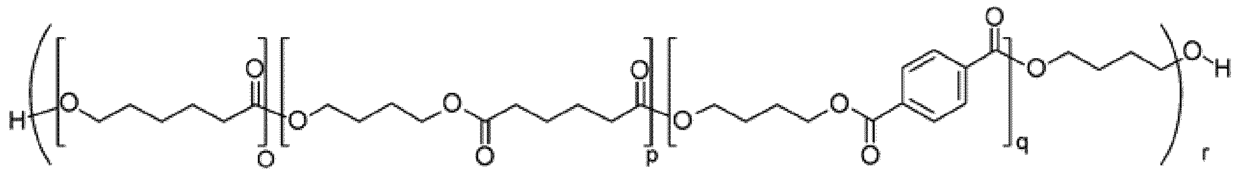

Formula (B-4)

(In formula (B-4), o, p, q and r each independently represent a positive integer.)

The same evaluations as in Example 13 were performed. The results are illustrated in Table 3.

[Table 3A]

| | Raw material | | | | Reaction time [h] |
|---|---|---|---|---|---|
| | Biodegradable block (X) | Non-biodegradable block (Y) | | Molar ratio of biodegradable block (X) [%] | |
| | PCL [part by mass] | P(BG/SA) [part by mass] | P (BG/AA/tPA) [part by mass] | | |
| Example 13 | 5.4 | 400 | - | 1.0 | 6 |

(continued)

| | Raw material | | | | Reaction time [h] |
|---|---|---|---|---|---|
| | Biodegradable block (X) | Non-biodegradable block (Y) | | Molar ratio of biodegradable block (X) [%] | |
| | PCL [part by mass] | P(BG/SA) [part by mass] | P (BG/AA/tPA) [part by mass] | | |
| Example 14 | 11 | 400 | - | 2.0 | 3 |
| Example 15 | 11 | 400 | - | 2.0 | 6 |
| Example 16 | 29 | 400 | - | 5.2 | 6 |
| Example 17 | 29 | 400 | - | 5.2 | 3 |
| Example 18 | 66 | 400 | - | 11.1 | 24 |
| Example 19 | 66 | 400 | - | 11.1 | 7 |
| Example 20 | 99 | 350 | - | 17.6 | 24 |
| Example 21 | 99 | 350 | - | 17.6 | 3 |
| Example 22 | 197 | 300 | - | 33.1 | 24 |
| Example 23 | 197 | 300 | - | 33.1 | 6 |
| Example 24 | 197 | 300 | - | 33.1 | 5 |
| Example 25 | 52 | - | 351 | 12.0 | 7 |

[Table 3B]

| | Copolyester | | | | | | | |
|---|---|---|---|---|---|---|---|---|
| | Molecular weight (Mn) | Molecular weight (Mw) | Average chain length of biodegradable block (X) | Degradability in seawater | Degradability in fresh water | Degradability in soil | Degradability in compost | Melting point [°C] |
| | | | PCL | | | | | |
| Example 13 | 91860 | 228003 | 48.2 | C | C | B | A | 118 |
| Example 14 | 9202 | 25928 | 12.3 | C | C | B | A | 118 |
| Example 15 | 9948 | 31047 | 2.5 | B | B | A | A | 110 |
| Example 16 | 70238 | 177818 | 55.0 | C | C | B | A | 111 |
| Example 17 | 9202 | 25928 | 3.3 | B | B | A | A | 108 |
| Example 18 | 5323 | 16701 | 1.5 | C | C | B | A | 103 |
| Example 19 | 29536 | 137498 | 5.3 | C | C | B | A | 109 |
| Example 20 | 7276 | 44846 | 1.8 | A | A | A | A | 99 |
| Example 21 | 6965 | 20331 | 3.5 | C | C | B | A | 85 |
| Example 22 | 7106 | 36143 | 4.5 | C | C | B | A | 65 |
| Example 23 | 48046 | 196154 | 5.9 | C | C | B | A | 69 |
| Example 24 | 18515 | 56067 | 16.3 | B | B | A | A | 110 |
| Example 25 | 17704 | 47564 | 3.7 | C | C | B | A | 121 |

From the above-described Examples, it was confirmed that the copolyester resin according to the present invention was excellent in thermoformability and biodegradability, particularly excellent in biodegradability.

## Claims

1. A copolyester resin comprising a combination of:

   a biodegradable block (X) being a biodegradable constitutional unit; and
   a non-biodegradable block (Y) being a non-biodegradable constitutional unit.

2. The copolyester resin according to claim 1, wherein a molar ratio (X/Y) of the biodegradable block (X) to the non-biodegradable block (Y) is 1/99 to 95/5.

3. The copolyester resin according to claim 1, wherein the biodegradable block (X) is derived from a polymer (x) including a biodegradable constitutional unit derived from a structure in which hydroxyalkanoic acid or dibasic acid (I-a) and glycol (I-b) are bound to each other.

4. The copolyester resin according to claim 1, wherein the non-biodegradable block (Y) is derived from a polymer (y) including a non-biodegradable constitutional unit.

5. The copolyester resin according to claim 1, wherein an average chain length of the biodegradable block (X) is greater than 1.2.

6. The copolyester resin according to claim 3, wherein the hydroxyalkanoic acid is a constitutional unit derived from 6-hydroxyhexanoic acid or a constitutional unit derived from polycaprolactone.

7. The copolyester resin according to claim 3, wherein the dibasic acid (I-a) is expressed by a formula (1) and the glycol (I-b) is expressed by a formula (2):

[Chemical Formula 1]

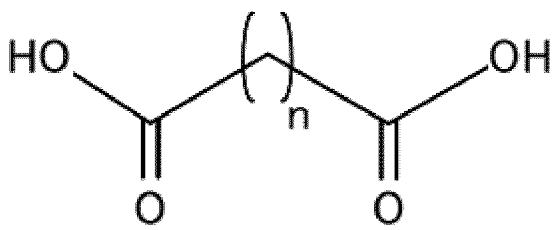

Formula (1)

(in the formula (1), n represents an integer from 4 to 8)

[Chemical Formula 2]

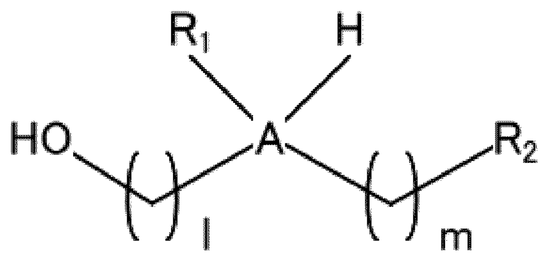

Formula (2)

(in the formula (2), A represents a carbon atom or an oxygen atom, $R_1$ represents a hydrogen atom, an alkyl group having 1 to 4 carbon atoms, or a hydroxyl group, and $R_2$ represents a hydrogen atom or a hydroxyl group; l and m each independently represent an integer from 0 to 4, and l + m is 1 or more;
note that, when A is an oxygen atom, $R_1$ and H bound to A are not present; either $R_1$ or $R_2$ is a hydroxyl group, and not both $R_1$ and $R_2$ are hydroxyl groups).

**8.** The copolyester resin according to claim 3, wherein the biodegradable constitutional unit in the polymer (x) is expressed by a formula (3A) or a formula (3B) below:

[Chemical Formula 3]

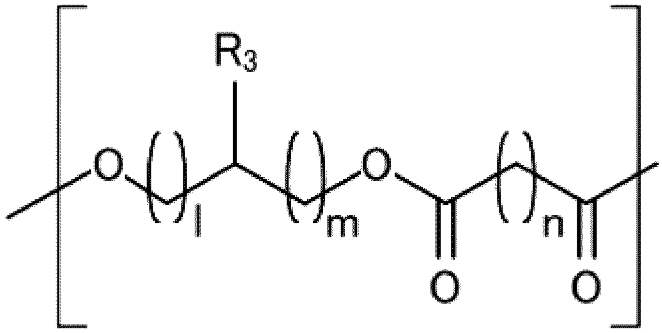

Formula (3A)

[Chemical Formula 4]

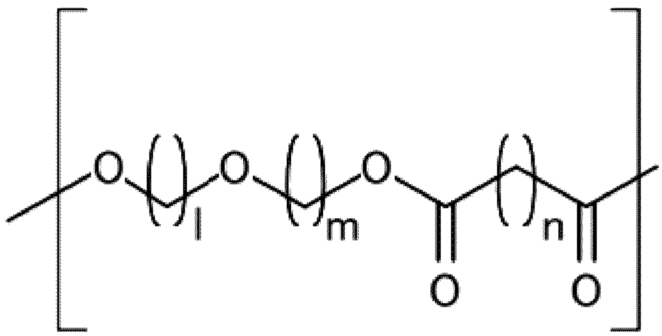

Formula (3B)

(in the formula (3A) and the formula (3B), $R_3$ represents a hydrogen atom or a methyl group, l and m each independently represent an integer from 0 to 4 and l + m is 1 or more, and n represents an integer from 4 to 8).

**9.** The copolyester resin according to claim 3, wherein the dibasic acid (I-a) is at least one selected from the group consisting of adipic acid, azelaic acid, and sebacic acid.

**10.** The copolyester resin according to claim 3, wherein the glycol (I-b) is at least one selected from the group consisting of ethylene glycol, diethylene glycol, 1,2-propylene glycol, 1,3-propylene glycol, 2-methyl-1,3-propanediol, 1,3-butanediol, 1,4-butanediol, 1,5-pentanediol, 3-methyl-1,5-pentanediol, 1,6-hexanediol, and 1,9-nonanediol.

**11.** The copolyester resin according to claim 3, wherein the biodegradable constitutional unit in the polymer (x) is at least one selected from the group consisting of

a constitutional unit derived from a structure in which ethylene glycol and adipic acid are bound to each other, a constitutional unit derived from a structure in which diethylene glycol and adipic acid are bound to each other, a constitutional unit derived from a structure in which 1,2-propylene glycol and adipic acid are bound to each other, a constitutional unit derived from a structure in which 1,3-propylene glycol and adipic acid are bound to each other, a constitutional unit derived from a structure in which 2-methyl-1,3-propanediol and adipic acid are bound to each other, a constitutional unit derived from a structure in which 1,3-butanediol and adipic acid are bound to each

other, a constitutional unit derived from a structure in which 1,4-butanediol and adipic acid are bound to each other, a constitutional unit derived from a structure in which 1,5-pentanediol and adipic acid are bound to each other, a constitutional unit derived from a structure in which 3-methyl-1,5-pentanediol and adipic acid are bound to each other, a constitutional unit derived from a structure in which 1,6-hexanediol and adipic acid are bound to each other, a constitutional unit derived from a structure in which 1,9-nonanediol and adipic acid are bound to each other,

a constitutional unit derived from a structure in which ethylene glycol and sebacic acid are bound to each other, a constitutional unit derived from a structure in which diethylene glycol and sebacic acid are bound to each other, a constitutional unit derived from a structure in which 1,2-propylene glycol and sebacic acid are bound to each other, a constitutional unit derived from a structure in which 1,3-propylene glycol and sebacic acid are bound to each other, a constitutional unit derived from a structure in which 2-methyl-1,3-propanediol and sebacic acid are bound to each other, a constitutional unit derived from a structure in which 1,3-butanediol and sebacic acid are bound to each other, a constitutional unit derived from a structure in which 1,4-butanediol and sebacic acid are bound to each other, a constitutional unit derived from a structure in which 1,5-pentanediol and sebacic acid are bound to each other, a constitutional unit derived from a structure in which 3-methyl-1,5-pentanediol and sebacic acid are bound to each other, a constitutional unit derived from a structure in which 1,6-hexanediol and sebacic acid are bound to each other, a constitutional unit derived from a structure in which 1,9-nonanediol and sebacic acid are bound to each other,

a constitutional unit derived from a structure in which ethylene glycol, 1,6-hexanediol, and adipic acid are bound to each other, a constitutional unit derived from a structure in which ethylene glycol, 1,6-hexanediol, 2-methyl-1,3-propanediol, and adipic acid are bound to each other,

a constitutional unit derived from a structure in which ethylene glycol, diethylene glycol, and adipic acid are bound to each other, a constitutional unit derived from a structure in which ethylene glycol, diethylene glycol, 2-methyl-1,3-propanediol, and adipic acid are bound to each other,

a constitutional unit derived from a structure in which ethylene glycol and sebacic acid are bound to each other, and a constitutional unit derived from a structure in which ethylene glycol, 2-methyl-1,3-propanediol, adipic acid, and sebacic acid are bound to each other.

**12.** The copolyester resin according to claim 4, wherein the non-biodegradable constitutional unit in the polymer (y) is derived from butylene succinate or butylene adipate terephthalate.

**13.** The copolyester according to claim 4, wherein the non-biodegradable constitutional unit in the polymer (y) is either a constitutional unit derived from a structure in which 1,4-butanediol and succinic acid are bound to each other or a constitutional unit derived from a structure in which 1,4-butanediol, adipic acid, and terephthalic acid are bound to each other.

**14.** The copolyester resin according to claim 1, wherein the biodegradable block (X) being the biodegradable constitutional unit includes a unit (A) and a unit (B), the unit (A) and the unit (B) being any one of (i) to (iii) below:

(i) the unit (A) is a triad unit derived from "a structure in which 2-methyl-1,3-propanediol, adipic acid, and 2-methyl-1,3-propanediol are bound to each other" and the unit (B) is a triad unit derived from "a structure in which 1,4-butanediol, adipic acid, and 1,4-butanediol are bound to each other";
(ii) the unit (A) is a triad unit derived from "a structure in which 2-methyl-1,3-propanediol, sebacic acid, and 2-methyl-1,3-propanediol are bound to each other" and the unit (B) is a triad unit derived from "a structure in which 1,4-butanediol, sebacic acid, and 1,4-butanediol are bound to each other"; and
(iii) the unit (A) is a triad unit derived from "a structure in which 3-methyl-1,5-pentanediol, adipic acid, and 3-methyl-1,5-pentanediol are bound to each other" and the unit (B) is a triad unit derived from "a structure in which 1,4-butanediol, adipic acid, and 1,4-butanediol are bound to each other".

**15.** The copolyester resin according to claim 1, wherein a melting point (Tm) of the copolyester resin is 65°C or higher.

**16.** The copolyester resin according to claim 1, wherein the copolyester resin is biodegradable in seawater environments, freshwater environments, soil environments, and compost.

**17.** A method for producing the copolyester resin according to any one of claims 1 to 16, the copolyester resin including a combination of a biodegradable block (X) and a non-biodegradable block (Y),

the biodegradable block (X) being a block derived from a polymer (x) including a biodegradable constitutional unit,

the non-biodegradable block (Y) being a block derived from a polymer (y) including a non-biodegradable constitutional unit,
the method comprising:
subjecting the polymer (x) and the polymer (y) to a transesterification reaction to obtain a block copolymer including the biodegradable block (X) and the non-biodegradable block (Y).

**18.** A resin composition comprising the copolyester resin according to any one of claims 1 to 16.

**19.** A sheet or a film comprising the resin composition according to claim 18.

**INTERNATIONAL SEARCH REPORT**

International application No.
**PCT/JP2023/019050**

**A. CLASSIFICATION OF SUBJECT MATTER**

***C08G 63/16***(2006.01)i; ***C08G 63/08***(2006.01)i; ***C08G 63/78***(2006.01)i; ***C08J 5/18***(2006.01)i; ***C08L 101/16***(2006.01)i
FI: C08G63/16; C08G63/78; C08L101/16; C08J5/18 ZBP; C08G63/08

According to International Patent Classification (IPC) or to both national classification and IPC

**B. FIELDS SEARCHED**

Minimum documentation searched (classification system followed by classification symbols)

C08G63/16; C08G63/08; C08G63/78; C08J5/18; C08L101/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 7-157553 A (AGENCY OF IND SCIENCE & TECHNOL) 20 June 1995 (1995-06-20) claims, paragraphs [0008], [0017], examples | 1-11, 15-19 |
| X | JP 2003-40990 A (DAINIPPON INK & CHEM INC) 13 February 2003 (2003-02-13) claims, paragraph [0052], examples | 1-5, 7-11, 15-19 |
| X | JP 9-143255 A (KURARAY CO LTD) 03 June 1997 (1997-06-03) claims, paragraph [0015], examples | 1-13, 15-19 |
| X | JP 11-323107 A (KURARAY CO LTD) 26 November 1999 (1999-11-26) claims, paragraphs [0021], [0028]-[0030], [0039], examples | 1-19 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 June 2023** | **04 July 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/019050**

| Patent document cited in search report | Publication date (day/month/year) | Patent family member(s) | Publication date (day/month/year) |
|---|---|---|---|
| JP 7-157553 A | 20 June 1995 | (Family: none) | |
| JP 2003-40990 A | 13 February 2003 | (Family: none) | |
| JP 9-143255 A | 03 June 1997 | (Family: none) | |
| JP 11-323107 A | 26 November 1999 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Polymer Degradation and Stability*, 2020, vol. 181, 109353
- *Polymer Degradation and Stability*, 2021, vol. 184, 109467